(19) Europäisches Patentamt
European Patent Office
Office européen des brevets

(11) EP 0 499 835 B1

(12) **EUROPÄISCHE PATENTSCHRIFT**

(45) Veröffentlichungstag und Bekanntmachung des Hinweises auf die Patenterteilung:
**06.11.1996 Patentblatt 1996/45**

(51) Int Cl.$^6$: **C08K 5/00**, C08L 33/06, C09D 7/12, C04B 41/48, C09D 133/06

(21) Anmeldenummer: **92101313.2**

(22) Anmeldetag: **28.01.1992**

(54) **Wässrige Polymerdispersionen, enthaltend organische Verbindungen mit Carbonat- und Carbonylgruppen, sowie damit hergestellte Anstrich- und Beschichtungssysteme**

Aqueous polymer dispersions comprising organic compounds containing carbonate and carbonyl groups and paints or coating compositions made therefrom

Dispersions aqueuses de polymères contenantes des composés organiques contenantes de groupes carbonates et carbonyles, et compositions de peinture ou de revêtement fabriques à partir de celui-ci

(84) Benannte Vertragsstaaten:
**AT BE CH DE ES FR GB IT LI NL SE**

(30) Priorität: **21.02.1991 DE 4105354**

(43) Veröffentlichungstag der Anmeldung:
**26.08.1992 Patentblatt 1992/35**

(73) Patentinhaber: **BASF Aktiengesellschaft**
**67063 Ludwigshafen (DE)**

(72) Erfinder:
- **Schwartz, Manfred, Dr.**
  **W-8000 München 71 (DE)**
- **Baecher, Reinhard, Dr.**
  **W-6702 Bad Duerkheim (DE)**
- **Dotzauer, Bernhard, Dr.**
  **W-6701 Maxdorf (DE)**
- **Wistuba, Eckehardt, Dr.**
  **W-6702 Bad Duerkheim (DE)**
- **Boettcher, Andreas, Dr.**
  **W-6907 Nussloch (DE)**

(56) Entgegenhaltungen:
**EP-A- 0 300 378** **EP-A- 0 355 028**
**DE-A- 4 105 355**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 499 835 B1

## Beschreibung

In der DE-A-38 27 975 sowie in der DE-A-40 03 909 werden Beschichtungssysteme mit aromatischen Ketonen, vorzugsweise Benzophenon beschrieben, die durch Bestrahlung mit ultraviolettem Licht vernetzbar sind. In der DE-A-39 30 585 werden Anstrichsysteme beschrieben, die ebenfalls durch die Anwesenheit von aromatischen Ketonen, vorzugsweise Benzophenon, bzw. deren copolymerisierbaren Derivaten durch UV-Bestrahlung vernetzbar sind. In diesen Schriften werden feste Photoinitiatoren eingesetzt. Auch bei niedrigen Dosierungen an diesen Photoinitiatoren wird ein Vergilben der Produkte beobachtet.

Der US-A-4 602 097 sind gefärbte ethoxilierte Benzophenonderivate auf Basis von 3- bzw. 4-Hydroxybenzophenon zu entnehmen, wobei die Ethylenoxid-Gruppierungen über einen Ethersauerstoff an das Benzophenongerüst angebunden sind.

Aufgabe der vorliegenden Erfindung war es, diese Nachteile zu vermeiden.

Es wurde überraschenderweise gefunden, daß durch Verwendung spezieller Carbonyl- und Carbonatgruppen enthaltender Photoinitiatoren, die unterhalb von 400 nm absorbieren und praktisch ungefärbt sind, keine Verfärbung selbst der unbestrahlten Polymerprodukte hervorgerufen wird. Sofern entsprechende Thioxanthonderivate zur Verwendung kommen, ist deren Absorptionsmaximum im langwelligeren Bereich zu finden. Damit einher geht allerdings eine leichte Färbung des Photoinitiators.

Gegenstand der vorliegenden Erfindung sind wäßrige Polymerdispersionen, die gegebenenfalls Zuschlagstoffe und/oder Pigmente enthalten und dadurch gekennzeichnet sind, daß sie im wesentlichen bestehen aus einem Gemisch aus

A) einer 20 bis 65 gew.%igen wäßrigen Dispersion eines Copolymerisates aus

(a) 0,5 bis 5 Gew.-% Einheiten von carboxylgruppen- und/oder amidhaltigen olefinisch ungesättigten Verbindungen und

(b) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatischen Verbindungen und

B) 0,1 bis 5 Gew.-%, bezogen auf die Menge des in der Komponente (A) enthaltenen Copolymerisats, mindestens eines aromatischen Ketons der allgemeinen Formel (I)

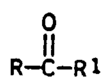

(I),

worin

R für einen geradkettigen Alkylrest mit 1 bis 4 Kohlenstoffatomen, einen verzweigten, gegebenenfalls substituierten, Alkylrest mit 3 oder 4 Kohlenstoffatomen, für einen Arylrest mit 6 bis 20 Kohlenstoffatomen oder den Rest $R^1$ steht und

$R^1$ für den Rest

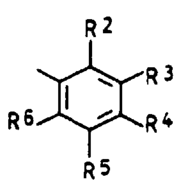

steht, wobei die Reste
$R^2$ bis $R^6$ untereinander gleich oder verschieden sind und für H, Alkyl mit 1 bis 4 Kohlenstoffatomen oder Phenyl stehen mit der Maßgabe, daß mindestens einer, aber maximal drei der Reste $R^2$ bis $R^6$ für den Rest

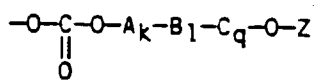

stehen, worin A, B und C untereinander gleich oder verschieden sind und
für zweiwertige Oxaalkylenreste der Formel

$$\{CHR^a\text{-}CHR^b\text{-}O\}_y$$

wobei $R^a$ und $R^b$ untereinander gleich oder verschieden sein können und H, OH, Aryl, COOH, $COOCH_3$, $COOC_2H_5$ oder Alkyl mit 1 bis 4 Kohlenstoffatomen und y = 1 bis 80 bedeuten können, für $-(CH_2)_n-O-(CH_2)_p-$ mit n = 1 bis 5 und p = 1 bis 5 oder einen Polyoxaalkylenrest mit 2 bis 20 Sauerstoffatomen, die miteinander über mindestens eine $-CH_2-$, oder $-CH_2-CH(CH_3)-$Gruppe verbunden sind, für einen Rest $-(CH_2)_m-O-CO-O-(CH_2)_n-$, $-(CH_2)_n-O-CO-NH-(CH_2)_m-$, $-(CH_2)_n-NH-CO-O-(CH_2)_m-$, $-(CH_2)_m-CO-O-(CH_2)_n-$ oder $-(CH_2)_m-O-CO-(CH_2)_n-$ mit m = 1 bis 10, n = 1 bis 10, für einen, gegebenenfalls substituierten, Cycloalkylenrest mit 5 bis 10 Kohlenstoffatomen, für einen (Bis)methylencycloalkylenrest mit 6 bis 12 Kohlenstoffatomen oder für einen, gegebenenfalls substituierten, o-, m- oder p-Phenylenrest stehen, k, l und q Laufzahlen von 1 bis 80 bedeuten und $A_k$ und $C_q$ auch für Einfachbindungen stehen können, wobei mindestens einer der Reste $A_k$, $B_l$ und $C_q$ mindestens zwei Sauerstoffatome enthält,

Z für H, Alkyl mit jeweils 1 bis 6 Kohlenstoffatomen in der Alkylgruppe, Phenyl, mit 1 bis 20 Kohlenstoffatome enthaltendem geradkettigen oder verzweigten Alkyl substituiertes Phenyl, oder

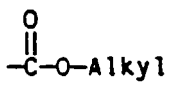, 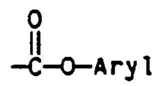, 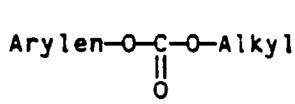,

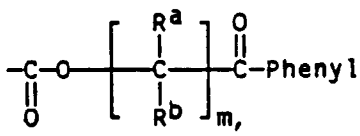 oder 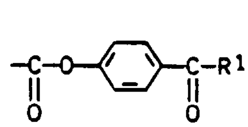

worin Alkyl 1 bis 8 Kohlenstoffatome, Aryl 6 bis 18 Kohlenstoffatome enthalten kann, steht oder für den Fall, daß R für einen Arylrest steht, einer der Reste $R^2$ oder $R^6$ für ein Schwefelatom stehen kann, durch das der Arylrest in ortho-Position mit $R^1$ verbunden ist.

Die Ketone der allgemeinen Formel (I) sind ebenfalls Gegenstand der Erfindung.

Gegenstand der vorliegenden Erfindung ist auch ein Verfahren zur Herstellung von überzügen und Imprägnierungen, das dadurch gekennzeichnet ist, daß die erfindungsgemäßen wäßrigen Polymerdispersionen, die gegebenenfalls Zuschlagstoffe und/oder Pigmente enthalten, bei und/oder nach ihrer Trocknung durch UV-Licht und/oder natürliches Sonnenlicht bestrahlt werden.

Ebenso sind Gegenstand der vorliegenden Erfindung Anstrich- und Beschichtungssysteme zur Herstellung von Beschichtungen bzw. Anstrichen, die bei und/oder nach ihrer Trocknung durch UV-Licht und/oder natürliches Sonnenlicht bestrahlt werden, die erfindungsgemäße wäßrige Polymerdispersionen enthalten, wobei das Copolymerisat vor der Vernetzung eine Glastemperatur von -35 bis +70°C aufweist.

Derartige Anstrichsysteme können zusätzlich Zinksalz- und/oder andere Vernetzungssysteme enthalten.

Gegenstand der vorliegenden Erfindung ist auch ein Verfahren zur Beschichtung von nicht abgebundenen Betondachsteinen, wobei ein Gemisch aus

A) einer 20 bis 65 gew.-%igen wäßrigen Dispersion eines Copolymerisates aus

(a) 0,5 bis 5 Gew.-% Einheiten von carboxylgruppen- und/oder amidhaltigen olefinisch ungesättigten Verbindungen und

(b) 0,1 bis 5 Gew.-% Einheiten von Carbonylgruppen aufweisenden Monomeren, die mit Dihydraziden aliphatischer, 2 bis 10 Kohlenstoffatome enthaltender Dicarbonsäuren vernetzt sind, und

(c) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatische Verbindungen in solcher Auswahl und in solchen Mengenverhältnissen, daß das Copolymerisat vor der Vernetzung eine Glastemperatur von -35 bis +30°C aufweist und

B) 0,1 bis 3 Gew.-%, bezogen auf die Menge des in der Komponente (A) enthaltenen Copolymerisats, aromatischer Ketone der oben genannten allgemeinen Formel (I),
auf die nicht abgebundenen Betondachsteine aufgetragen wird und die Beschichtung bei und/oder nach ihrer Trocknung durch UV-Licht und/oder natürliches Sonnenlicht bestrahlt wird.

Bevorzugt ist außerdem ein derartiges Verfahren, wobei eine Beschichtung auf nicht abgebundene Betondachsteine aufgetragen wird, die aus einem Gemisch aus

A) einer 20 bis 65 gew.-%igen wäßrigen Dispersion eines Copolymerisates aus

(a) 0,5 bis 5 Gew.-% Einheiten von carboxygruppen- und/oder amidhaltigen olefinisch ungesättigten Verbindungen und

(b) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatische Verbindungen in solcher Auswahl und in solchen Mengenverhältnissen, daß das Copolymerisat vor der Vernetzung eine Glastemperatur von -35 bis +30°C aufweist und

B) 0,1 bis 3 Gew.-%, bezogen auf die Menge des in der Komponente (A) enthaltenen Copolymerisats, aromatischer Ketone der allgemeinen Formel (I) besteht, wobei die Beschichtung bzw. die Anstriche bei und/oder nach ihrer Trocknung durch UV-Licht und/oder natürliches Sonnenlicht bestrahlt werden.

Eine besonders bevorzugte Ausführungsform des erfindungsgemäßen Verfahrens besteht auch darin, daß ein Gemisch aus

A) einer 20 bis 65 gew.-%igen wäßrigen Dispersion eines Copolymerisates aus

(a) 0,5 bis 5 Gew.-% Einheiten von carboxylgruppentragenden bzw. amidischen olefinischen Verbindungen und

(b) der Differenz zu 100 Gew.-% an Einheiten von wenigstens zwei Monomeren aus der Gruppe der Acryl- und Methacrylsäureester von $C_1$- bis $C_{18}$-Alkanolen in solcher Auswahl und in solchen Mengenverhältnissen, daß das Copolymerisat vor der Vernetzung eine Glastemperatur von -35 bis +70°C aufweist,

B) 0,1 bis 3 Gew.-%, bezogen auf die Menge des in der Komponente (A) enthaltenen Copolymerisates, aromatischer Ketone der folgenden Struktur

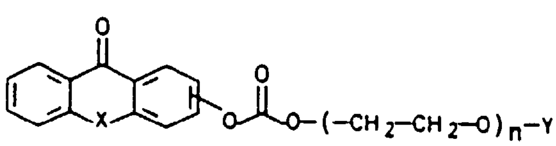

oder

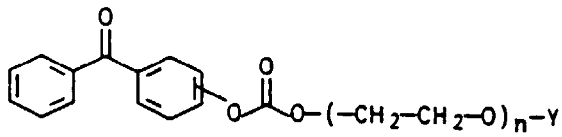

oder

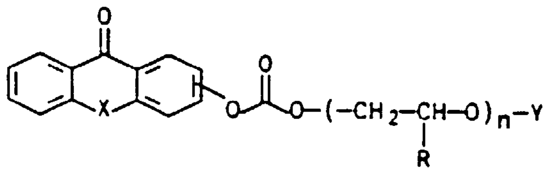

oder

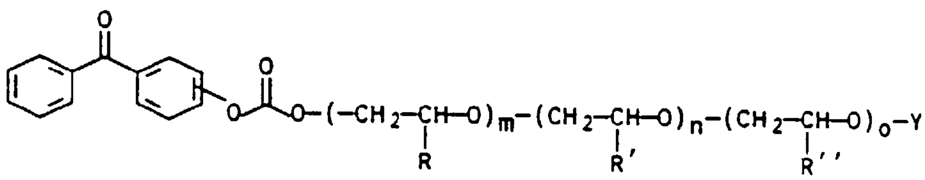

oder

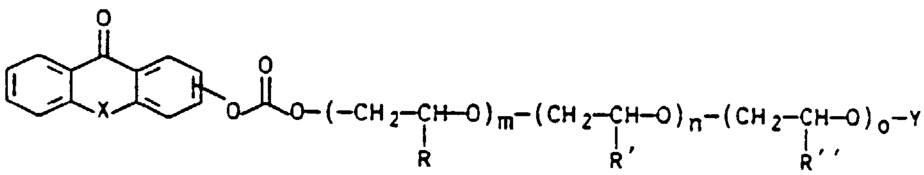

oder

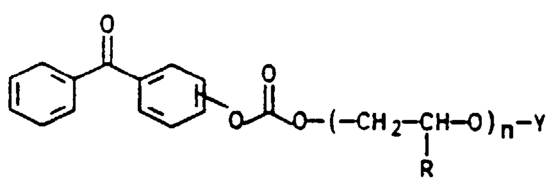

mit X = O, S, NH oder NR,
R = H, Alkyl mit 1 bis 8 Kohlenstoffatomen = R', R''
Y = H, Alkyl mit 1 bis 8 Kohlenstoffatomen, Phenyl oder substituiertes Phenyl mit bis zu 20 Kohlenstoffatomen im Substituenten oder

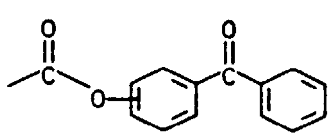

n = 1 bis 80, m = 1 bis 80, 0 = 1 bis 80

und gegebenenfalls

C) zusätzlich Zinksalz- und/oder anderen Vernetzungssystemen

verwendet wird und die Beschichtung bzw. Anstriche bei und/oder nach ihrer Trocknung durch UV-Licht und/oder natürliches Sonnenlicht bestrahlt werden.

Durch ihren flüssigen Aggregatszustand sind die erfindungsgemäß einzusetzenden Photoinitiatoren gut in die Dispersionen einarbeitbar. Durch die Oberflächenaktivität dieser Photoinitiatoren können sie zumindest als Teilersatz von Emulgatoren in den Polymerdispersionen eingesetzt werden. Zudem zeigen sie keine Verfärbung bei oder nach der UV-Bestrahlung.

Zu den Aufbaukomponenten der erfindungsgemäßen wäßrigen Polymerdispersionen und ihren Verwendungsmöglichkeiten ist im einzelnen folgendes auszuführen.

A) Als Komponente (A) enthalten die wäßrigen Polymerdispersionen eine 20 bis 65, vorzugsweise 30 bis 55 gew.-%ige wäßrige Dispersion eines Copolymerisates aus

(a) 0,5 bis 5 Gew.-% von carboxylgruppenhaltigen und/oder amidgruppenhaltigen olefinisch ungesättigten Verbindungen, z.B. Acrylsäure, Methacrylsäure, Acrylamid oder Methacrylamid sowie gegebenenfalls andere funktionalisierte Monomere, wie z.B. Vinylsulfonsäure,

(b) der Differenz zu 100 Gew.-% von wenigstens zwei Monomeren aus der Gruppe der Acryl- und Methacrylsäureester von Alkanolen mit 1 bis 18, vorzugsweise 1 bis 8 Kohlenstoffatomen, z.B. Methylmethacrylat, tert.-Butylacrylat, n-Butylacrylat und 2-Ethylhexylacrylat, und vinylaromatischer Verbindungen, wie z.B. Styrol und $\alpha$-Methylstyrol, wobei diese unter (b) genannten Monomeren vorzugsweise in solchen Mengenverhältnissen ausgewählt werden, daß das Copolymerisat vor der Vernetzung eine Glastemperatur von -30 bis +70°C aufweist. Die zur Einstellung einer gewünschten Glastemperatur zu beachtenden Gesetzmäßigkeiten für Art und Menge geeigneter Comonomerer sind dem Fachmann bekannt. Man unterscheidet dabei oft zwischen sogenannten "hartmachenden" und "weichmachenden" Monomeren.

Die Ausdrücke "hartmachend" bzw. "weichmachend" bezeichnen solche Monomere, die in der Literatur gelegentlich ungenau als "hart" bzw. "weich" angegeben werden, d.h. solche Monomere, die für sich polymerisiert harte bzw. weiche Homopolymere ergeben. In diesem Sinne versteht man im allgemeinen unter hartmachenden Monomeren solche, deren Homopolymerisate Glastemperaturen von etwa 25 bis 120°C, unter weichmachenden Monomeren solche, deren Homopolymerisate Glastemperaturen von etwa -60 bis +25°C haben. Zwar gibt es bekanntermaßen fließende übergänge zwischen diesen Monomergruppen, doch sind für beide typische Vertreter bekannt. Typisch hartmachende Monomere aus der Gruppe der Acryl- und Methacrylsäureester sind z.B. Methylmethacrylat und tert.-Butylacrylat. Hartmachende olefinisch ungesättigte Monomere sind z.B. Styrol und $\alpha$-Methylstyrol. Typisch weichmachende Monomere sind Butylacrylat und 2-Ethylhexylacrylat.

Bevorzugte Copolymerisate sind solche aus 40 bis 59 Gew.-% Styrol und 60 bis 38 Gew.-% n-Butylacrylat oder 40 bis 59 Gew.-% Methylmethacrylat und 60 bis 39 Gew.-% 2-Ethylhexylacrylat (b) und 0,5 bis 2,5 Gew.-% Acrylsäure, besonders bevorzugt 2 Gew.-% Acrylsäure als Komponente (a), wobei die Summe der Prozentzahlen von (a) + (b) 100 beträgt.

Die Herstellung von wäßrigen Dispersionen von Copolymerisaten aus den Komponenten (a) und (b) und die hierfür üblicherweise zu verwendenden Ingredienzien, wie Polymerisationsinitiator(systeme), wie z.B. Na-peroxidisulfat oder Dibenzoylperoxid, Emulgatoren, wie z.B. Na-Laurylsuflat, Na-Oleat, das Na-Salz eines Schwefelsäurehalbesters eines i-Nonylphenolethoxylates mit im Mittel 25 Ethylenoxid-Einheiten, das Na-Salz eines sulfonsauren $C_{12}$-$C_{24}$-Alkans, sowie deren Gemische mit i-Nonylphenolethoxylat mit im Mittel 25 Ethylenoxid-Einheiten oder ein $C_{16}$-$C_{18}$-Fettalkoholethoxylat mit 22 Ethylenoxid-Einheiten, Puffersubstanzen, wie z.B. $Na_2P_2O_7$, sind seit langem Stand der Technik und beispielsweise in Encyclopedia of Polymer Science and Engineering, Vol. 6 (1986), 1 bis 52, beschrieben.

B) Als Komponente B) enthalten die erfindungsgemäßen wäßrigen Polymerdispersionen 0,1 bis 5, vorzugsweise 0,2 bis 2 Gew.-%, bezogen auf die Menge des in der Komponente (A) enthaltenen Copolymerisats mindestens eines aromatischen Ketons der allgemeinen Formel (I)

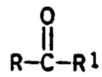 (I),

worin

R für einen geradkettigen Alkylrest mit 1 bis 4 Kohlenstoffatomen, wie z.B. Methyl, Ethyl, n-Propyl oder Butyl, einen verzweigten, gegebenenfalls substituierten, Alkylrest mit 3 oder 4 Kohlenstoffatomen, wie z.B. i-Propyl oder i-Butyl, für einen Arylrest mit 6 bis 20 Kohlenstoffatomen, wie z.B. Phenyl, Naphthyl, Tosyl oder Xylyl, oder den Rest $R^1$ steht und

$R^1$ für den Rest

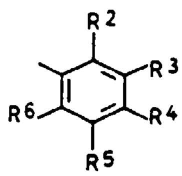

steht, wobei die Reste $R^2$ bis $R^6$ untereinander gleich oder verschieden sind und für H, Alkyl mit 1 bis 4 Kohlenstoffatomen wie z.B. Methyl, Ethyl, Isopropyl, Butyl oder Phenyl stehen, mit der Maßgabe, daß mindestens einer, aber maximal drei der Reste $R^2$ bis $R^6$ für den Rest

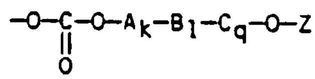

stehen, worin A, B und C untereinander gleich oder verschieden sind und
für zweiwertige Oxaalkylenreste der Formel

$$\{CHR^a\text{-}CHR^b\text{-}O\}_y$$

mit y = 1 bis 80, wobei $R^a$ und $R^b$ untereinander gleich oder verschieden sein können und H, OH, Aryl, z.B. Phenyl, COOH, $COOCH_3$, $COOC_2H_5$, oder Alkyl mit 1 bis 4 Kohlenstoffatomen bedeuten können, für $-(CH_2)_n-O-(CH_2)_p-$ mit n = 1 bis 5 und p = 1 bis 5
oder einen Polyoxaalkylenrest mit 2 bis 20 Sauerstoffatomen, die miteinander über mindestens eine $-CH_2-$, oder $-CH_2-CH(CH_3)$-Gruppe verbunden sind, für einen Rest $-(CH_2)_m-O-CO-O-(CH_2)_n-$, $-(CH2)_n-O-CO-NH-(CH_2)_m-$, $-(CH_2)_n-NH-CO-O-(CH_2)_m-$,
$-(CH_2)_m-CO-O-(CH_2)_n-$oder $-(CH_2)_m-O-CO-(CH_2)_n-$ mit m = 1 bis 10, n = 1 bis 10, für einen, gegebenenfalls substituierten Cycloalkylenrest mit 5 bis 10 Kohlenstoffatomen, z.B. einen Cyclohexylenrest, für einen (Bis) methylencycloalkylenrest mit 6 bis 12 Kohlenstoffatomen oder für einen, gegebenenfalls substituierten, o-, m- oder p-Phenylenrest stehen, k, 1 und q Laufzahlen von 1 bis 80 bedeuten und $A_k$ und $C_q$ auch für Einfachbindungen stehen können, wobei mindestens einer der Reste $A_k$, $B_l$ und $C_q$ mindestens zwei Sauerstoffatome enhält,

Z für H, Alkyl mit jeweils 1 bis 6 Kohlenstoffatomen in der Alkylgruppe (z.B. i-Propyl oder tert.-Butyl), Phenyl, mit 1 bis 20 Kohlenstoffatome enthaltendem geradkettigen oder verzweigten Alkyl substituiertes Phenyl, oder

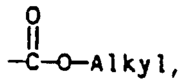 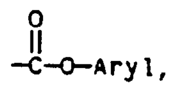 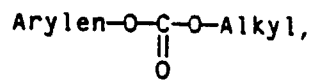

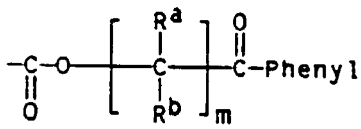 oder 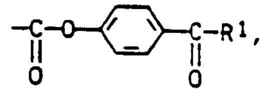

worin Alkyl 1 bis 8 Kohlenstoffatome, Aryl 6 bis 18 Kohlenstoffatome enthalten kann,
steht oder für den Fall, daß R für einen Arylrest steht, einer der Reste $R^2$ oder $R^6$ für ein Schwefelatom stehen kann, durch das der Arylrest in ortho-Position mit $R^1$ verbunden ist.

Überraschenderweise zeigen die erfindungsgemäßen wäßrigen Polymerdispersionen eine gute Lagerstabilität, sowie eine hervorragende Dispergierbarkeit.

Die Verbindungen der allgemeinen Formel (I) und deren Herstellung sind in der DE-A-41 05 355 beschrieben.

So läßt sich beispielsweise eine Verbindung der Formel (II)

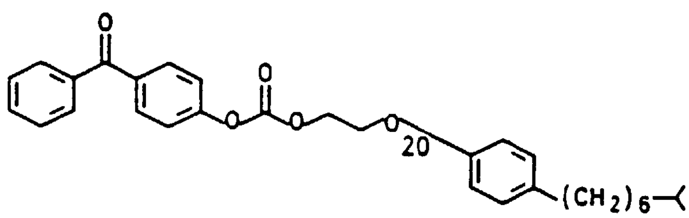

(II)

durch Reaktion von 4-Chlorformylbenzophenon mit Lutensol® AP 20 (BASF Aktiengesellschaft) in Gegenwart von Triethylamin in Toluol bei 25°C, Abtrennen des ausgefallenen Triethylaminhydrochlorids und Einengen des Filtrats bis zur Gewichtskonstanz im Ölpumpenvakuum herstellen.

Dementsprechend läßt sich auch eine Verbindung der Formel (III)

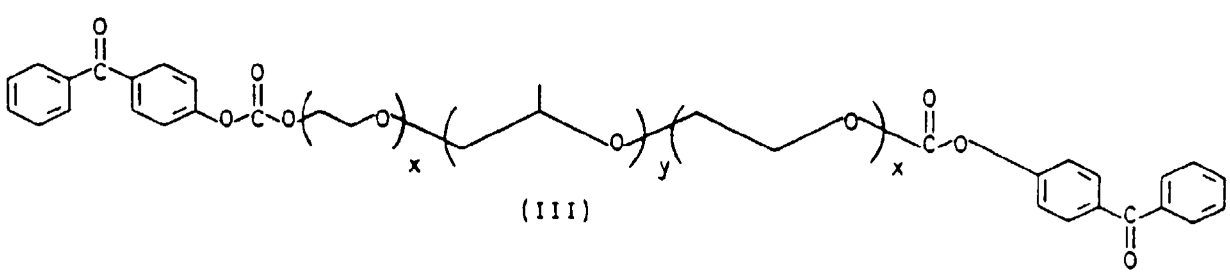

(III)

durch Reaktion von 4-Chlorformylbenzophenon mit Pluronic® PE 6400 (= Ethylenoxid/Propylenoxid-Blockcopolymer, $\overline{M}_w$ ca. 2900) im Molverhältnis 2:1 in Gegenwart von Triethylamin in Toluol bei 25°C, Abtrennen des ausgefallenen Triethylaminhydrochlorid und Einengen des Filtrats bis zur Gewichtskonstanz im Ölpumpenvakuum herstellen.

Die erfindungsgemäßen Benzophenon- bzw. heterocyclischen Benzophenonderivate sind über eine Carbonatgruppe an die Ethylen- bzw. Propylenoxidgruppen angebunden.

Das aromatische Carbonylsystem kann auch ein Derivat des Benzophenons, Oxanthons, Thioxanthons oder Acridons sein.

An den Phenylringen der Benzophenonabkömmlinge bzw. der heterocyclischen Derivate können weitere Substituenten wie z.B. Alkyl-, Alkoxy-, Alkylthio-, Halogen-, Nitro-, Amino-, Alkylamino-, Dialkylamino-, Alkanoyl-, Alkanoylamino-, Benzoylamino- oder Sulfonamidgruppen mit 1 bis 4 C-Alkylgruppen angehängt sein.

Die Anzahl der Ethylenoxid- bzw. anderer Alkenoxidgruppierungen kann zwischen 1 und 80 Moläquivalenten liegen. Besonders bevorzugt ist der Bereich von 20 bis 50 Ethylenoxideinheiten.

Die erfindungsgemäßen wäßrigen Polymerdispersionen können gegebenenfalls übliche Zuschlagstoffe, wie z.B. Kreide, Quarzmehl und/oder Schwerspat und/oder Pigmente, wie z.B. Eisenoxid-Rot- bzw. Eisenoxid-Schwarz-Pigmente enthalten.

Die erfindungsgemäßen wäßrigen Polymerdispersionen können zur Herstellung von Anstrich- und Beschichtungssystemen, sowie für Imprägnierungen auf mineralischen Substraten dienen. Besonders eignen sich die erfindungsgemäßen wäßrigen Polymerdispersionen zur Beschichtung von nicht abgebundenen Betondachsteinen, deren Anschmutzbarkeit deutlich verringert und deren Witterungsbeständigkeit verbessert wird.

Die in den Beispielen genannten Teile und Prozente sind, soweit nicht anders angegeben, Gewichtsteile bzw. Gewichtsprozente.

Der Test zur Feststellung der Verschmutzungsneigung der Polymerfilme wurde folgendermaßen durchgeführt:

In die Copolymer-Dispersionen AI, AII und AIII wurden bei 85°C die im folgenden angegebenen Mengen Benzophenon, bzw. der angegebenen Verbindungen der allgemeinen Formel (I) eingerührt (= Vergleichsbeispiele 1b, 2b, 3b, bzw. Beispiele 1d, 2d, 3d und 1f, 2f, 3f).

Die jeweilige Dispersion wurde als 200 µ starker Film auf eine Glasplatte aufgezogen.

Danach erfolgte eine Trocknung von 1 Minute bei 70°C. Der Film wurde danach ca. 24 h bei Raumtemperatur gelagert. Anschließend wurde der Film 10 Minuten mit einer 80-W-Niederdrucklampe UV-bestrahlt (= Vergleichsbeispiele 1c, 2c, 3c, bzw. Beispiele 1e, 2e, 3e und 1g, 2g, 3g).

Zur Prüfung der Verschmutzungsneigung wurde am oberen Ende des jeweiligen Filmes ca. 1 g pulverförmige Aktivkohle mit einem Metallsieb als runde Verschmutzung mit einem Durchmesser von ca. 5 cm aufgestreut. Nach einer Ruhezeit von 1 h wurde die Aktivkohle seitlich abgeklopft und kurz mit Wasser abgespült.

Beurteilung:

Die Beurteilung erfolgte nach Trocknung der Filme.

0 keine Verschmutzung
1 kaum sichtbare Verschmutzung
2 geringe Verschmutzung
3 leichte Verschmutzung
4 mittlere Verschmutzung
5 starke Verschmutzung
6 sehr starke Verschmutzung

Die Ergebnisse sind in der Tabelle angegeben.

Herstellung einer Polymerdispersion (AI):

In an sich üblicher Weise wurde eine 50 gew.-%ige Polymerdispersion aus 49 Teilen Methylmethacrylat, 49 Teilen 2-Ethylhexylacrylat und 2 Teilen Acrylsäure mit 0,5 Teilen Natriumperoxidisulfat, bezogen auf die Menge an Monomeren, hergestellt. Die Monomeren wurden mit 1,5 Teilen des Natriumsalzes eines Schwefelsäurehalbesters eines iso-Nonylphenolethoxylates mit im Mittel 25 Ethylenoxid-Einheiten und 0,5 Teilen eines iso-Nonylphenolethoxylates mit im Mittel 25 Ethylenoxid-Einheiten, jeweils bezogen auf die Monomeren, emulgiert.

Die Ergebnisse der Acetonquellungen/Auswaschverluste bzw. Verschmutzungsneigung der Filme können der nachstehenden Tabelle entnommen werden.

Vergleichsbeispiel 1a

Ein Film der oben beschriebenen Polymerdispersion (AI) wird 10 min mit einer 80 W Hg-Niederdrucklampe UV-bestrahlt.

Die Ergebnisse der Acetonquellungen/Auswaschverluste bzw. Verschmutzungsneigung der Filme können der nachstehenden Tabelle entnommen werden.

Vergleichsbeispiel 1b

100 g der oben beschriebenen Polymerdispersion (AI) wurden mit 0,25 g Benzophenon unter Rühren bei 85°C abgemischt.

Die Ergebnisse der Acetonquellungen/Auswaschverluste bzw. Verschmutzungsneigung der Filme können der nachstehenden Tabelle entnommen werden.

Vergleichsbeispiel 1c

Ein Film des Vergleichsbeispiels 1b wird 10 min mit einer 80 W Hg-Niederdrucklampe UV-bestrahlt.
Die Ergebnisse der Acetonquellungen/Auswaschverluste bzw. Verschmutzungsneigung der Filme können der nachstehenden Tabelle entnommen werden.

Beispiel 1d (erfindungsgemäß)

100 g der oben beschriebenen Polymerdispersion (AI) wurden mit 0,05 9 einer Verbindung der Formel (III) unter Rühren bei 85°C abgemischt.
Die Ergebnisse der Acetonquellungen/Auswaschverluste bzw. Verschmutzungsneigung der Filme können der nachstehenden Tabelle entnommen werden.

Beispiel 1e (erfindungsgemäß)

Ein Film des Beispiels 1d wird 10 min mit einer 80 W Hg-Niederdrucklampe UV-bestrahlt.
Die Ergebnisse der Acetonquellungen/Auswaschverluste bzw. Verschmutzungsneigung der Filme können der nachstehenden Tabelle entnommen werden.

Beispiel 1f (erfindungsgemäß)

100 g der oben beschriebenen Polymerdispersion (AI) wurden mit 0,05 g einer Verbindung (gemäß der allgemeinen Formel (I)), die an Benzophenon über eine Carbonatgruppe ein iso-Nonylphenol-Ethylenoxid-Addukt mit im Mittel 20 Ethylenoxid-Einheiten, bezogen auf das Nonylphenol, gebunden enthält (= Verbindung der Formel (II)), unter Rühren bei 85°C abgemischt.
Die Ergebnisse der Acetonquellungen/Auswaschverluste bzw. Verschmutzungsneigung der Filme können der nachstehenden Tabelle entnommen werden.

Beispiel 1g (erfindungsgemäß)

Ein Film des Beispiels 1f wird 10 min mit einer 80 W Hg-Niederdrucklampe UV-bestrahlt.
Die Ergebnisse der Acetonquellungen/Auswaschverluste bzw. Verschmutzungsneigung der Filme können der nachstehenden Tabelle entnommen werden.

Herstellung einer Polymerdispersion (AII):

In an sich üblicher Weise wurde eine 50 gew.-%ige Polymerdispersion aus 59 Teilen Butylacrylat, 39 Teilen Styrol und 2 Teilen Acrylsäure mit 0,5 Teilen Natriumperoxidisulfat, bezogen auf die Monomeren, hergestellt. Die Monomeren wurden mit 1,5 Teilen des Natriumsalzes eines Schwefelsäurehalbesters eines iso-Nonylphenolethoxylates mit im Mittel 25 Ethylenoxideinheiten und 0,5 Teilen eines iso-Nonylphenolethoxylates mit im Mittel 25 Ethylenoxidheinheiten, jeweils bezogen auf die Monomeren, emulgiert.
Die Ergebnisse der Acetonquellungen/Auswaschverluste bzw. Verschmutzungsneigung der Filme können der nachstehenden Tabelle entnommen werden.

Vergleichsbeispiel 2a

Ein Film der Polymerdispersion (AII) wird 10 min mit einer 80 W Hg-Niederdrucklampe UV-bestrahlt.
Die Ergebnisse der Acetonquellungen/Auswaschverluste bzw. Verschmutzungsneigung der Filme können der nachstehenden Tabelle entnommen werden.

Vergleichsbeispiel 2b

100 g der Polymerdispersion (AII) wurden mit 0,25 g Benzophenon unter Rühren bei 85°C abgemischt.
Die Ergebnisse der Acetonquellungen/Auswaschverluste bzw. Verschmutzungsneigung der Filme können der nachstehenden Tabelle entnommen werden.

Vergleichsbeispiel 2c

Ein Film des Vergleichsbeispiels 2b wird 10 min mit einer 80 W Hg-Niederdrucklampe UV-bestrahlt.

Die Ergebnisse der Acetonquellungen/Auswaschverluste bzw. Verschmutzungsneigung der Filme können der nachstehenden Tabelle entnommen werden.

Beispiel 2d (erfindungsgemäß)

100 g der Polymerdispersion (AII) wurden mit 0,05 g einer Verbindung der Formel (III) unter Rühren bei 85°C abgemischt.

Die Ergebnisse der Acetonquellungen/Auswaschverluste bzw. Verschmutzungsneigung der Filme können der nachstehenden Tabelle entnommen werden.

Beispiel 2e (erfindungsgemäß)

Ein Film des Beispiels 2d wird 10 min mit einer 80 W Hg-Niederdrucklampe UV-bestrahlt.

Die Ergebnisse der Acetonquellungen/Auswaschverluste bzw. Verschmutzungsneigung der Filme können der nachstehenden Tabelle entnommen werden.

Beispiel 2f (erfindungsgemäß)

100 g der Polymerdispersion (AII) wurden mit 0,05 g einer Verbindung (gemäß der allgemeinen Formel (I)), die an Benzophenon über eine Carbonatgruppe ein iso-Nonylphenol-Ethylenoxid-Addukt, mit im Mittel 20 Ethylenoxid-Einheiten, bezogen auf das Nonylphenol, gebunden enthält (= Verbindung der Formel (II)), unter Rühren bei 85°C abgemischt.

Die Ergebnisse der Acetonquellungen/Auswaschverluste bzw. Verschmutzungsneigung der Filme können der nachstehenden Tabelle entnommen werden.

Beispiel 2g (erfindungsgemäß)

Ein Film des Beispiels 2f wird 10 min mit einer 80 W Hg-Niederdrucklampe UV-bestrahlt.

Die Ergebnisse der Acetonquellungen/Auswaschverluste bzw. Verschmutzungsneigung der Filme können der nachstehenden Tabelle entnommen werden.

Herstellung einer Polymerdispersion (AIII):

Hergestellt wird eine wäßrige Emulsion aus 210 g n-Butylacrylat, 200 g 2-Ethylhexylacrylat, 90 g Styrol, 15 g Acrylsäure, 12,5 g einer 50 gew.-%igen wäßrigen Acrylamidlösung, 37,5 g einer 20 gew.-%igen wäßrigen Lösung des Natriumsalzes eines sulfonsauren $C_{12}$-$C_{14}$-Alkans, 17,5 g einer 20 gew.-%igen Lösung eines Fettalkoholethoxylates mit 22 Ethylenoxideinheiten und 179 g Wasser.

Anschließend werden 15 g der wäßrigen Emulsion mit 10 % einer wäßrigen Lösung von 2,5 g Natriumperoxidisulfat in 100 g Wasser versetzt und unter Rühren auf die Polymerisationstemperatur von 85°C erhitzt. Anschließend wurden unter Aufrechterhaltung der Polymerisationstemperatur und Rühren im Verlauf von 2 h die verbliebene Menge der wäßrigen Emulsion und dazu synchron im Verlauf von 2,25 h die verbliebene Menge der wäßrigen Initiatorlösung über getrennte Zuläufe kontinuierlich zugeführt. Nach beendeter Initiatorzufuhr wurde noch 1 h nachpolymerisiert und 15 g einer ammoniakalischen wäßrigen Zinkammoniumhydrogencarbonatlösung (Zinkgehalt 16 %) eingerührt.

Vergleichsbeispiel 3a

Ein Film der Polymerdispersion (AIII) wird 10 min mit einer 80 W Hg-Niederdrucklampe UV-bestrahlt.

Die Ergebnisse der Acetonquellungen/Auswaschverluste bzw. Verschmutzungsneigung der Filme können der nachstehenden Tabelle entnommen werden.

Vergleichsbeispiel 3b

100 g der Polymerdispersion (AIII) wurden mit 0,25 g Benzophenon unter Rühren bei 85°C abgemischt.

Die Ergebnisse der Acetonquellungen/Auswaschverluste bzw. Verschmutzungsneigung der Filme können der nachstehenden Tabelle entnommen werden.

Vergleichsbeispiel 3c

Ein Film des Vergleichsbeispiels 3b wird 10 min mit einer 80 W Hg-Niederdrucklampe UV-bestrahlt.

Die Ergebnisse der Acetonquellungen/Auswaschverluste bzw. Verschmutzungsneigung der Filme können der nachstehenden Tabelle entnommen werden.

Beispiel 3d (erfindungsgemäß)

100 g der Polymerdispersion (AIII) wurden mit 0,05 g einer Verbindung der Formel (III) unter Rühren bei 85°C abgemischt.

Die Ergebnisse der Acetonquellungen/Auswaschverluste bzw. Verschmutzungsneigung der Filme können der nachstehenden Tabelle entnommen werden.

Beispiel 3e (erfindungsgemäß)

Ein Film des Beispiels 3d wird 10 min mit einer 80 W Hg-Niederdrucklampe UV-bestrahlt.

Die Ergebnisse der Acetonquellungen/Auswaschverluste bzw. Verschmutzungsneigung der Filme können der nachstehenden Tabelle entnommen werden.

Beispiel 3f (erfindungsgemäß)

100 g der Polymerdispersion (AIII) wurden mit 0,05 g einer Verbindung (gemäß der allgemeinen Formel (I)), die an Benzophenon über eine Carbonatgruppe ein iso-Nonylphenol-Ethylenoxid-Addukt mit im Mittel 20 Ethylenoxid-Einheiten, bezogen auf das Nonylphenol, gebunden enthält (= Verbindung der Formel (II)), unter Rühren bei 85°C abgemischt.

Die Ergebnisse der Acetonquellungen/Auswaschverluste bzw. Verschmutzungsneigung der Filme können der nachstehenden Tabelle entnommen werden.

Beispiel 3g (erfindungsgemäß)

Ein Film des Beispiels 3f wird 10 min mit einer 80 W Hg-Niederdrucklampe UV-bestrahlt.

Die Ergebnisse der Acetonquellungen/Auswaschverluste bzw. Verschmutzungsneigung der Filme können der nachstehenden Tabelle entnommen werden.

Tabelle

| Bsp.Nr. | Acetonquellung [%] | Acetonauswaschverlust [%] | Verschmutzungsneigung [Note] |
|---|---|---|---|
| Polymerdispersion (AI) | teilw.aufgelöst | | 4 |
| Vergleichsbeispiel 1a | 713 | 16.4 | 4 |
| Vergleichsbeispiel 1b | teilw.aufgelöst | | 4 |
| Vergleichsbeispiel 1c | 700 | 15 | 3 |
| Beispiel 1d | teilw.aufgelöst | | 4 |
| Beispiel 1e | 500 | 6.1 | 2 |
| Beispiel 1f | teilw.aufgelöst | | 4 |
| Beispiel 1g | 410 | 3.7 | 2 |
| Polymerdispersion (AII) | teilw.aufgelöst | | 3 |
| Vergleichsbeispiel 2a | 535 | 4.4 | 3 |
| Vergleichsbeispiel 2b | teilw.aufgelöst | | 3 |
| Vergleichsbeispiel 2c | 435 | 3.4 | 2 |
| Beispiel 2d | teilw.aufgelöst | | 3 |
| Beispiel 2e | 310 | 3,0 | 1 |
| Beispiel 2f | teilw.aufgelöst | | 3 |
| Beispiel 2g | 320 | 3.1 | 1 |
| Polymerdispersion (AIII) | 207 | 7.0 | 3 |
| Vergleichsbeispiel 3a | 202 | 4.0 | 3 |

Tabelle (fortgesetzt)

| Bsp.Nr. | Acetonquellung [%] | Acetonauswaschverlust [%] | Verschmutzungsneigung [Note] |
|---|---|---|---|
| Vergleichsbeispiel 3b | 208 | 6.0 | 3 |
| Vergleichsbeispiel 3c | 172 | 3.0 | 2 |
| Beispiel 3d | 220 | 6.0 | 3 |
| Beispiel 3e | 202 | 3.0 | 1 |
| Beispiel 3f | 221 | 6.0 | 3 |
| Beispiel 3g | 213 | 3.0 | 1 |

**Patentansprüche**

**Patentansprüche für folgende Vertragsstaaten : AT, BE, CH, DE, FR, GB, IT, LI, NL, SE**

**1.** Wäßrige Polymerdispersion, die gegebenenfalls Zuschlagstoffe und/oder Pigmente enthält, dadurch gekennzeichnet, daß sie im wesentlichen besteht aus einem Gemisch aus

A) einer 20 bis 65 gew.%igen wäßrigen Dispersion eines Copolymerisates aus

(a) 0,5 bis 5 Gew.-% Einheiten von carboxylgruppen- und/oder amidhaltigen olefinisch ungesättigten Verbindungen und

(b) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatischen Verbindungen und

B) 0,1 bis 5 Gew.-%, bezogen auf die Menge des in der Komponente (A) enthaltenen Copolymerisats, mindestens eines aromatischen Ketons der allgemeinen Formel (I)

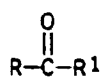

(I),

worin

R für einen geradkettigen Alkylrest mit 1 bis 4 Kohlenstoffatomen, einen verzweigten, gegebenenfalls substituierten, Alkylrest mit 3 oder 4 Kohlenstoffatomen, für einen Arylrest mit 6 bis 20 Kohlenstoffatomen oder den Rest $R^1$ steht und

$R^1$ für den Rest

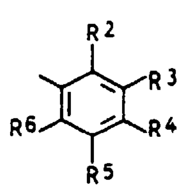

steht, wobei die Reste
$R^2$ bis $R^6$ untereinander gleich oder verschieden sind und für H, Alkyl mit 1 bis 4 Kohlenstoffatomen oder Phenyl stehen mit der Maßgabe, daß mindestens einer, aber maximal drei der Reste $R^2$ bis $R^6$ für den Rest

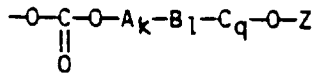

stehen, worin A, B und C untereinander gleich oder verschieden sind und für zweiwertige Oxaalkylenreste der Formel

$$\{CHR^a\text{-}CHR^b\text{-}O\}_y$$

wobei $R^a$ und $R^b$ untereinander gleich oder verschieden sein können und H, OH, Aryl, COOH, $COOCH_3$, $COOC_2H_5$ oder Alkyl mit 1 bis 4 Kohlenstoffatomen und y = 1 bis 80 bedeuten können, für $-(CH_2)_n\text{-}O\text{-}(CH_2)_p-$ mit n = 1 bis 5 und p = 1 bis 5 oder einen Polyoxaalkylenrest mit 2 bis 20 Sauerstoffatomen, die miteinander über mindestens eine $-CH_2-$, oder $-CH_2\text{-}CH(CH_3)$-Gruppe verbunden sind, für einen Rest $-(CH_2)_m\text{-}O\text{-}CO\text{-}O\text{-}(CH_2)_n-$, $-(CH_2)_n\text{-}O\text{-}CO\text{-}NH\text{-}(CH_2)_m-$, $-(CH_2)_n\text{-}NH\text{-}CO\text{-}O\text{-}(CH_2)_m-$, $-(CH_2)_m\text{-}CO\text{-}O\text{-}(CH_2)_n-$ oder $-(CH_2)_m\text{-}O\text{-}CO\text{-}(CH_2)_n-$ mit m = 1 bis 10, n = 1 bis 10, für einen, gegebenenfalls substituierten, Cycloalkylenrest mit 5 bis 10 Kohlenstoffatomen, für einen (Bis)methylencycloalkylenrest mit 6 bis 12 Kohlenstoffatomen oder für einen, gegebenenfalls substituierten, o-, m- oder p-Phenylenrest stehen, k, l und q Laufzahlen von 1 bis 80 bedeuten und $A_k$ und $C_q$ auch für Einfachbindungen stehen können, wobei mindestens einer der Reste $A_k$, $B_l$ und $C_q$ mindestens zwei Sauerstoffatome enthält,

Z für H, Alkyl mit jeweils 1 bis 6 Kohlenstoffatomen in der Alkylgruppe, Phenyl, mit 1 bis 20 Kohlenstoffatome enthaltendem geradkettigen oder verzweigten Alkyl substituiertes Phenyl, oder

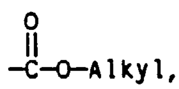, 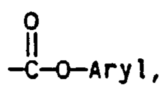, 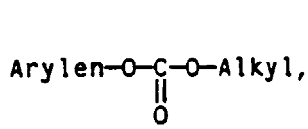,

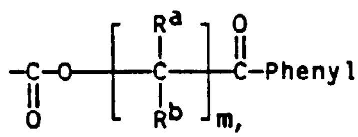 oder 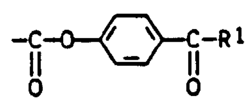

worin Alkyl 1 bis 8 Kohlenstoffatome, Aryl 6 bis 18 Kohlenstoffatome enthalten kann, steht oder für den Fall, daß R für einen Arylrest steht, einer der Reste $R^2$ oder $R^6$ für ein Schwefelatom stehen kann, durch das der Arylrest in ortho-Position mit $R^1$ verbunden ist.

2. Verfahren zur Herstellung von überzügen und Imprägnierungen, dadurch gekennzeichnet, daß wäßrige Polymerdispersionen nach Anspruch 1, die gegebenenfalls Zuschlagstoffe und/oder Pigmente enthalten, bei und/oder nach ihrer Trocknung durch UV-Licht und/oder natürliches Sonnenlicht bestrahlt werden.

3. Anstrich- und Beschichtungssysteme, zur Herstellung von Beschichtungen bzw. Anstrichen, die bei und/oder nach ihrer Trocknung durch UV-Licht und/oder natürliches Sonnenlicht bestrahlt werden, dadurch gekennzeichnet, daß sie eine wäßrige Polymerdispersion nach Anspruch 1 enthalten, wobei das Copolymerisat vor der Vernetzung eine Glastemperatur von -35 bis +70°C aufweist.

4. Anstrichsysteme nach Anspruch 3, dadurch gekennzeichnet, daß sie zusätzlich Zinksalz- und/oder andere Vernetzungssysteme enthalten.

5. Verfahren nach Anspruch 2 zur Beschichtung von nicht abgebundenen Betondachsteinen, dadurch gekennzeichnet, daß ein Gemisch aus

A) einer 20 bis 65 gew.%igen wäßrigen Dispersion eines Copolymerisates aus

(a) 0,5 bis 5 Gew.-% Einheiten von carboxylgruppen- und/oder amidhaltigen olefinisch ungesättigten Verbindungen und

(b) 0,1 bis 5 Gew.-% Einheiten von Carbonylgruppen aufweisenden Monomeren, die mit Dihydraziden aliphatischer, 2 bis 10 Kohlenstoffatome enthaltender Dicarbonsäuren vernetzt sind, und

(c) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatischen Verbindungen in solcher Auswahl und in solchen Mengenverhältnissen, daß das Copolymerisat vor der Vernetzung eine Glastemperatur von -35 bis +30°C aufweist und

B) 0,1 bis 3 Gew.-%, bezogen auf die Menge des in der Komponente (A) enthaltenen Copolymerisats, aromatischer Ketone der in Anspruch 1 genannten allgemeinen Formel (I),

auf die nicht abgebundenen Betondachsteine aufgetragen wird und die Beschichtung bei und/oder nach ihrer Trocknung durch UV-Licht und/oder natürliches Sonnenlicht bestrahlt wird.

**6.** Verfahren nach Anspruch 2, dadurch gekennzeichnet, daß eine Beschichtung auf nicht abgebundene Betondachsteine aufgetragen wird, die aus einem Gemisch aus

A) einer 20 bis 65 gew.%igen wäßrigen Dispersion eines Copolymerisates aus

(a) 0,5 bis 5 Gew.-% Einheiten von carboxylgruppen- und/oder amidhaltigen olefinisch ungesättigten Verbindungen und

(b) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatischen Verbindungen in solcher Auswahl und in solchen Mengenverhältnissen, daß das Copolymerisat vor der Vernetzung eine Glastemperatur von -35 bis +30°C aufweist und

B) 0,1 bis 3 Gew.-%, bezogen auf die Menge des in der Komponente (A) enthaltenen Copolymerisats, aromatischer Ketone der allgemeinen Formel (I)

besteht, und die Beschichtung bzw. Anstriche bei und/oder nach ihrer Trocknung durch UV-Licht und/oder natürliches Sonnenlicht bestrahlt werden.

**7.** Verfahren nach Anspruch 2, dadurch gekennzeichnet, daß ein Gemisch aus

A) einer 20 bis 65 gew.%igen wäßrigen Dispersion eines Copolymerisates aus

(a) 0,5 bis 5 Gew.-% Einheiten von carboxylgruppen- und/oder amidhaltigen olefinisch ungesättigten Verbindungen und

(b) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatische Verbindungen in solcher Auswahl und in solchen Mengenverhältnissen, daß das Copolymerisat vor der Vernetzung eine Glastemperatur von -35 bis +70°C aufweist,

B) 0,1 bis 3 Gew.%, bezogen auf die Menge des in der Komponente (A) enthaltenen Copolymerisats, aromatischer Ketone der folgenden Struktur

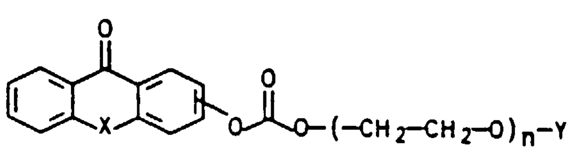

oder

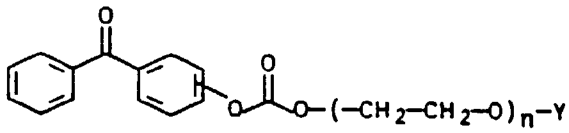

oder

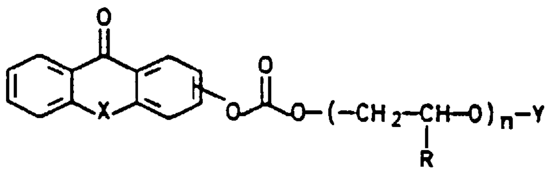

oder

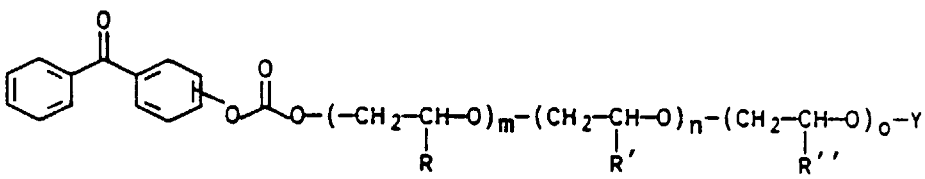

oder

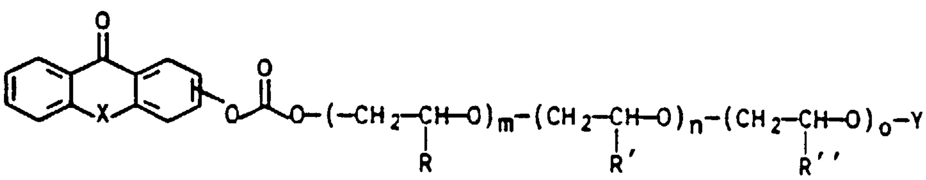

oder

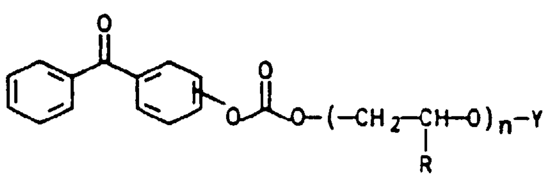

mit X = O, S, NH oder NR,
R = H, Alkyl mit 1 bis 8 Kohlenstoffatomen = R', R''
Y = H, Alkyl mit 1 bis 8 Kohlenstoffatomen, Phenyl oder substituiertes Phenyl mit bis zu 20 Kohlenstoffatomen im Substituenten oder

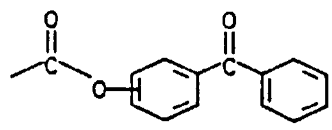

n = 1 bis 80, m = 1 bis 80, o = 1 bis 80
und gegebenenfalls

C) zusätzlich Zinksalz- und/oder anderen Vernetzungssystemen

verwendet wird und die Beschichtung bzw. Anstriche bei und/oder nach ihrer Trocknung durch UV-Licht und/oder natürliches Sonnenlicht bestrahlt werden.

**8.** Aromatisches Keton der allgemeinen Formel (I)

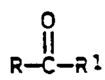

(I),

worin

R für einen geradkettigen Alkylrest mit 1 bis 4 Kohlenstoffatomen, einen verzweigten, gegebenenfalls substituierten, Alkylrest mit 3 oder 4 Kohlenstoffatomen, für einen Arylrest mit 6 bis 20 Kohlenstoffatomen oder den Rest $R^1$ steht und

$R^1$ für den Rest

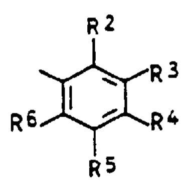

steht, wobei die Reste
$R^2$ bis $R^6$ untereinander gleich oder verschieden sind und für H, Alkyl mit 1 bis 4 Kohlenstoffatomen oder Phenyl stehen mit der Maßgabe, daß mindestens einer, aber maximal drei der Reste $R^2$ bis $R^6$ für den Rest

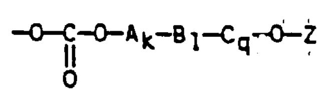

stehen, worin A, B und C untereinander gleich oder verschieden sind und
für zweiwertige Oxaalkylenreste der Formel

$$\{CHR^a-CHR^b-O\}_y$$

wobei $R^a$ und $R^b$ untereinander gleich oder verschieden sein können und H, OH, Aryl, COOH, $COOCH_3$, $COOC_2H_5$ oder Alkyl mit 1 bis 4 Kohlenstoffatomen und y = 1 bis 80 bedeuten können, für
$-(CH_2)_n-O-(CH_2)_p-$ mit n = 1 bis 5 und p = 1 bis 5
oder einen Polyoxaalkylenrest mit 2 bis 20 Sauerstoffatomen, die miteinander über mindestens eine $-CH_2-$, oder $-CH_2-CH(CH_3)$-Gruppe verbunden sind, für einen Rest $-(CH_2)_m-O-CO-O-(CH_2)_n-$, $-(CH_2)_n-O-CO-NH-(CH_2)_m-$, $-(CH_2)_n-NH-CO-O-(CH_2)_m-$, $-(CH_2)_m-CO-O-(CH_2)_n-$ oder $-(CH_2)_m-O-CO-(CH_2)_n-$ mit m = 1 bis 10,

n = 1 bis 10, für einen, gegebenenfalls substituierten, Cycloalkylenrest mit 5 bis 10 Kohlenstoffatomen, für einen (Bis)methylencycloalkylenrest mit 6 bis 12 Kohlenstoffatomen oder für einen, gegebenenfalls substituierten, o-, m- oder p-Phenylenrest stehen, k, l und q Laufzahlen von 1 bis 80 bedeuten und $A_k$ und $C_q$ auch für Einfachbindungen stehen können, wobei mindestens einer der Reste $A_k$, $B_l$ und $C_q$ mindestens zwei Sauerstoffatome enthält,

Z für H, Alkyl mit jeweils 1 bis 6 Kohlenstoffatomen in der Alkylgruppe, Phenyl, mit 1 bis 20 Kohlenstoffatome enthaltendem geradkettigen oder verzweigten Alkyl substituiertes Phenyl, oder

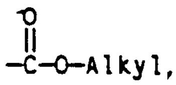, 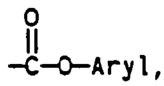, 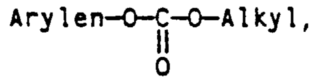,

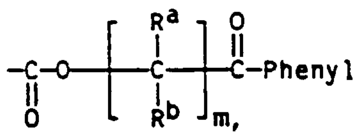 oder 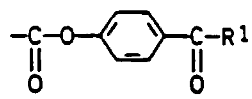

worin Alkyl 1 bis 8 Kohlenstoffatome, Aryl 6 bis 18 Kohlenstoffatome enthalten kann, steht oder für den Fall, daß R für einen Arylrest steht, einer der Reste $R^2$ oder $R^6$ für ein Schwefelatom Stehen kann, durch das der Arylrest in ortho-Position mit $R^1$ verbunden ist.

**Patentansprüche für folgenden Vertragsstaat : ES**

1. Verfahren zur Herstellung einer wäßrigen Polymerdispersion, die gegebenenfalls Zuschlagstoffe und/oder Pigmente enthält, dadurch gekennzeichnet, daß man in eine 20 bis 65 gew.%ige wäßrige Dispersion (A) eines Copolymerisates aus

(a) 0,5 bis 5 Gew.-% Einheiten von carboxylgruppen- und/oder amidhaltigen olefinisch ungesättigten Verbindungen und

(b) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatischen Verbindungen

als Komponente (B) 0,1 bis 5 Gew.-%, bezogen auf die Menge des in der Komponente (A) enthaltenen Copolymerisats, mindestens eines aromatischen Ketons der allgemeinen Formel (I)

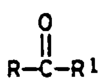 (I),

worin

R für einen geradkettigen Alkylrest mit 1 bis 4 Kohlenstoffatomen, einen verzweigten, gegebenenfalls substituierten, Alkylrest mit 3 oder 4 Kohlenstoffatomen, für einen Arylrest mit 6 bis 20 Kohlenstoffatomen oder den Rest $R^1$ Steht und

$R^1$ für den Rest

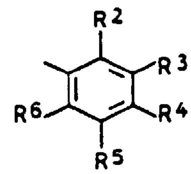

steht, wobei die Reste
$R^2$ bis $R^6$ untereinander gleich oder verschieden sind und für H, Alkyl mit 1 bis 4 Kohlenstoffatomen oder Phenyl stehen mit der Maßgabe, daß mindestens einer, aber maximal drei der Reste $R^2$ bis $R^6$ für den Rest

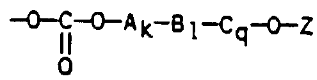

stehen, worin A, B und C untereinander gleich oder verschieden sind und
für zweiwertige Oxaalkylenreste der Formel

$$\{CHR^a\text{-}CHR^b\text{-}O\}_y$$

wobei $R^a$ und $R^b$ untereinander gleich oder verschieden sein können und H, OH, Aryl, COOH, $COOCH_3$, $COOC_2H_5$ oder Alkyl mit 1 bis 4 Kohlenstoffatomen und y = 1 bis 80 bedeuten können, für
$-(CH_2)_n-O-(CH_2)_p-$ mit n = 1 bis 5 und p = 1 bis 5
oder einen Polyoxaalkylenrest mit 2 bis 20 Sauerstoffatomen, die miteinander über mindestens eine $-CH_2-$, oder $-CH_2-CH(CH_3)$-Gruppe verbunden sind, für einen Rest $-(CH_2)_m-O-CO-O-(CH_2)_n-$, $-(CH_2)_n-O-CO-NH-(CH_2)_m-$, $-(CH_2)_n-NH-CO-O-(CH_2)_m-$, $-(CH_2)_m-CO-O-(CH_2)_n-$ oder $-(CH_2)_m-O-CO-(CH_2)_n-$ mit m = 1 bis 10, n = 1 bis 10, für einen, gegebenenfalls substituierten, Cycloalkylenrest mit 5 bis 10 Kohlenstoffatomen, für einen (Bis)methylencycloalkylenrest mit 6 bis 12 Kohlenstoffatomen oder für einen, gegebenenfalls substituierten, o-, m- oder p-Phenylenrest stehen, k, l und q Laufzahlen von 1 bis 80 bedeuten und $A_k$ und $C_q$ auch für Einfachbindungen stehen können, wobei mindestens einer der Reste $A_k$, $B_l$ und $C_q$ mindestens zwei Sauerstoffatome enthält,

Z für H, Alkyl mit jeweils 1 bis 6 Kohlenstoffatomen in der Alkylgruppe, Phenyl, mit 1 bis 20 Kohlenstoffatome enthaltendem geradkettigen oder verzweigtem Alkyl substituiertes Phenyl, oder

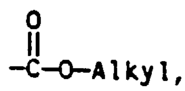, 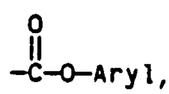, 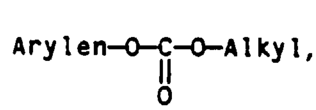,

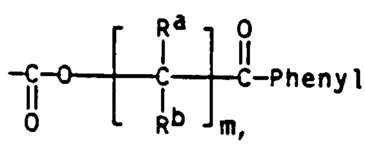 oder 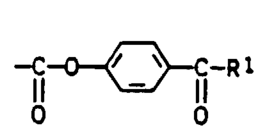

worin Alkyl 1 bis 8 Kohlenstoffatome, Aryl 6 bis 18 Kohlenstoffatome enthalten kann, steht oder für den Fall, daß R für einen Arylrest steht, einer der Reste $R^2$ oder $R^6$ für ein Schwefelatom stehen kann, durch das der Arylrest in ortho-Position mit $R^1$ verbunden ist,

einarbeitet.

**2.** Verfahren zur Herstellung von Überzügen und Imprägnierungen, dadurch gekennzeichnet, daß nach einem Verfahren gemäß Anspruch 1 erhältliche wäßrige Polymerdispersionen, die gegebenenfalls Zuschlagstoffe und/oder

Pigmente enthalten, bei und/oder nach ihrer Trocknung durch UV-Licht und/oder natürliches Sonnenlicht bestrahlt werden.

**3.** Verfahren nach Anspruch 1, dadurch gekennzeichnet, daß das Copolymerisat der wäßrigen Dispersion A) eine Glastemperatur von -35 bis +70°C aufweist.

**4.** Verfahren nach Anspruch 3, dadurch gekennzeichnet, daß man zusätzlich Zinksalz- und/oder andere Vernetzungssysteme einarbeitet.

**5.** Verfahren nach Anspruch 2 zur Beschichtung von nicht abgebundenen Betondachsteinen, dadurch gekennzeichnet, daß ein Gemisch aus einer 20 bis 65 gew.%igen wäßrigen Dispersion A) eines Copolymerisates aus

(a) 0,5 bis 5 Gew.-% Einheiten von carboxylgruppen- und/oder amidhaltigen olefinisch ungesättigten Verbindungen und

(b) 0,1 bis 5 Gew.-% Einheiten von Carbonylgruppen aufweisenden Monomeren, die mit Dihydraziden aliphatischer, 2 bis 10 Kohlenstoffatome enthaltender Dicarbonsäuren vernetzt sind, und

(c) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatischen Verbindungen in solcher Auswahl und in solchen Mengenverhältnissen, daß das Copolymerisat vor der Vernetzung eine Glastemperatur von -35 bis +30°C aufweist

und als Komponente 8) 0,1 bis 3 Gew.-%, bezogen auf die Menge des in der Komponente (A) enthaltenen Copolymerisats, aromatischer Ketone der in Anspruch 1 genannten allgemeinen Formel (I), auf die nicht abgebundenen Betondachsteine aufgetragen wird und die Beschichtung bei und/oder nach ihrer Trocknung durch UV-Licht und/oder natürliches Sonnenlicht bestrahlt wird.

**6.** Verfahren nach Anspruch 2, dadurch gekennzeichnet, daß eine Beschichtung auf nicht abgebundene Betondachsteine aufgetragen wird, die aus einem Gemisch aus einer 20 bis 65 gew.%igen wäßrigen Dispersion A) eines Copolymerisates aus

(a) 0,5 bis 5 Gew.-% Einheiten von carboxylgruppen- und/oder amidhaltigen olefinisch ungesättigten Verbindungen und

(b) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatischen Verbindungen in solcher Auswahl und in solchen Mengenverhältnissen, daß das Copolymerisat vor der Vernetzung eine Glastemperatur von -35 bis +30°C aufweist und

als Komponente B) 0,1 bis 3 Gew.-%, bezogen auf die Menge des in der Komponente (A) enthaltenen Copolymerisats, aromatischer Ketone der allgemeinen Formel (I) besteht, und die Beschichtung bzw. Anstriche bei und/oder nach ihrer Trocknung durch UV-Licht und/oder natürliches Sonnenlicht bestrahlt werden.

**7.** Verfahren nach Anspruch 2, dadurch gekennzeichnet, daß ein Gemisch aus einer 20 bis 65 gew.%igen wäßrigen Dispersion A) eines Copolymerisates aus

(a) 0,5 bis 5 Gew.-% Einheiten von carboxylgruppen- und/oder amidhaltigen olefinisch ungesättigten Verbindungen und

(b) der Differenz zu 100 Gew.-% an Einheiten von wenigstens zwei Monomeren aus der Gruppe der Acryl- und Methacrylsäureester von $C_1$- bis $C_{18}$-Alkanolen und vinylaromatische Verbindungen in solcher Auswahl und in solchen Mengenverhältnissen, daß das Copolymerisat vor der Vernetzung eine Glastemperatur von -35 bis +70°C aufweist,

und als Komponente B) 0,1 bis 3 Gew.%, bezogen auf die Menge des in der Komponente (A) enthaltenen Copolymerisats, aromatischer Ketone der folgenden Struktur

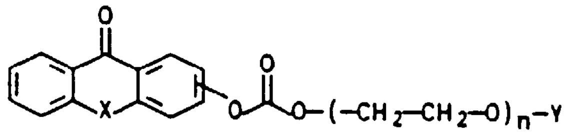

oder

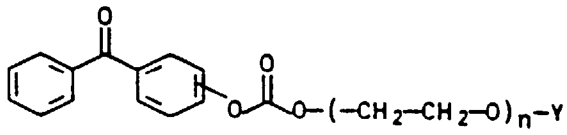

oder

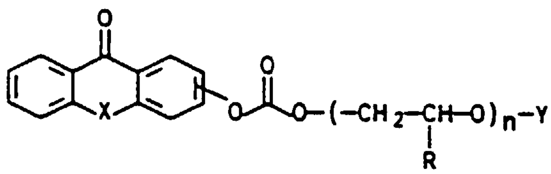

oder

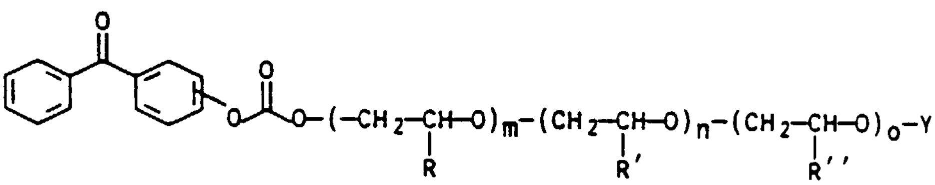

oder

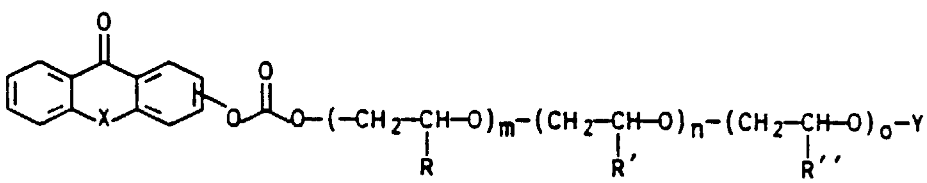

oder

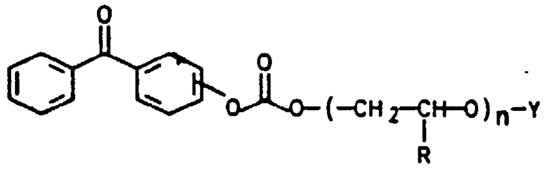

mit X = O, S, NH oder NR,
R = H, Alkyl mit 1 bis 8 Kohlenstoffatomen = R', R''

Y = H, Alkyl mit 1 bis 8 Kohlenstoffatomen, Phenyl oder substituiertes Phenyl mit bis zu 20 Kohlenstoffatomen im Substituenten oder

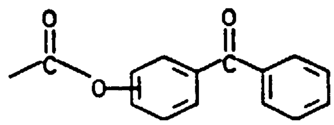

n = 1 bis 80, m = 1 bis 80, o = 1 bis 80
und gegebenenfalls

C) zusätzlich Zinksalz- und/oder anderen Vernetzungssystemen

verwendet wird und die Beschichtung bzw. Anstriche bei und/oder nach ihrer Trocknung durch UV-Licht und/oder natürliches Sonnenlicht bestrahlt werden.

**8.** Aromatisches Keton Verfahren zur Herstellung eines aromatischen Ketons der allgemeinen Formel (I)

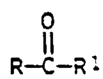

(I),

worin

R für einen geradkettigen Alkylrest mit 1 bis 4 Kohlenstoffatomen, einen verzweigten, gegebenenfalls substituierten, Alkylrest mit 3 oder 4 Kohlenstoffatomen, für einen Arylrest mit 6 bis 20 Kohlenstoffatomen oder den Rest $R^1$ steht und

$R^1$ für den Rest

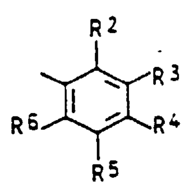

steht, wobei die Reste
$R^2$ bis $R^6$ untereinander gleich oder verschieden sind und für H, Alkyl mit 1 bis 4 Kohlenstoffatomen oder Phenyl stehen mit der Maßgabe, daß mindestens einer, aber maximal drei der Reste $R^2$ bis $R^6$ für den Rest

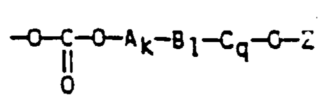

stehen, worin A, B und C untereinander gleich oder verschieden sind und
für zweiwertige Oxaalkylenreste der Formel

$$\{CHR^a\text{-}CHR^b\text{-}O\}_y$$

wobei $R^a$ und $R^b$ untereinander gleich oder verschieden sein können und H, OH, Aryl, COOH, $COOCH_3$, $COOC_2H_5$ oder Alkyl mit 1 bis 4 Kohlenstoffatomen und y = 1 bis 80 bedeuten können, für
$-(CH_2)_n\text{-}O\text{-}(CH_2)_p-$ mit n = 1 bis 5 und p = 1 bis 5

oder einen Polyoxaalkylenrest mit 2 bis 20 Sauerstoffatomen, die miteinander über mindestens eine $-CH_2-$, oder $-CH_2-CH(CH_3)$-Gruppe verbunden sind, für einen Rest $-(CH_2)_m-O-CO-O-(CH_2)_n-$, $-(CH_2)_n-O-CO-NH-(CH_2)_m-$, $-(CH_2)_n-NH-CO-O-(CH_2)_m-$, $-(CH_2)_m-CO-O-(CH_2)_n-$ oder $-(CH_2)_m-O-CO-(CH_2)_n-$ mit m = 1 bis 10, n = bis 10, für einen, gegebenenfalls substituierten, Cycloalkylenrest mit 5 bis 10 Kohlenstoffatomen, für einen (Bis)methylencycloalkylenrest mit 6 bis 12 Kohlenstoffatomen oder für einen, gegebenenfalls substituierten, o-, m- oder p-Phenylenrest stehen, k, l und q Laufzahlen von 1 bis 80 bedeuten und $A_k$ und $C_q$ auch für Einfachbindungen stehen können, wobei mindestens einer der Reste $A_k$, $B_l$ und $C_q$ mindestens zwei Sauerstoffatome enthält,

Z für H, Alkyl mit jeweils 1 bis 6 Kohlenstoffatomen in der Alkylgruppe, Phenyl, mit 1 bis 20 Kohlenstoffatome enthaltendem geradkettigen oder verzweigten Alkyl substituiertes Phenyl, oder

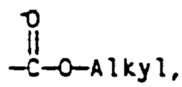 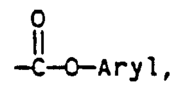 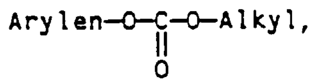

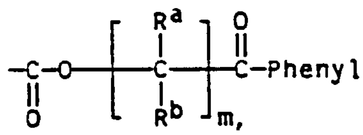 oder 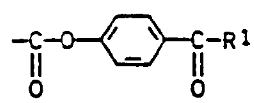

worin Alkyl 1 bis 8 Kohlenstoffatome, Aryl 6 bis 18 Kohlenstoffatome enthalten kann, steht oder für den Fall, daß R für einen Arylrest steht, einer der Reste $R^2$ oder $R^6$ für ein Schwefelatom stehen kann, durch das der Arylrest in ortho-Position mit $R^1$ verbunden ist.

## Claims

**Claims for the following Contracting States : AT, BE, CH, DE, FR, GB, IT, LI, NL, SE**

**1.** An aqueous polymer dispersion which may comprise adjuvants and/or pigments, which consists essentially of a mixture of

A) a from 20 to 65% by weight aqueous dispersion of a copolymer of

(a) from 0.5 to 5% by weight of units of carboxyl-and/or amide-containing olefinically unsaturated compounds and
(b) the difference up to 100% by weight of units of at least two monomers from the group consisting of acrylic and methacrylic esters of $C_1$-$C_{18}$-alkanols and aromatic vinyl compounds, and

B) from 0.1 to 5% by weight, based on the quantity of copolymer in component (A), of at least one aromatic ketone of the general formula (I)

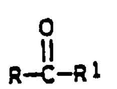 (I),

in which

R is a straight-chain alkyl radical of 1 to 4 carbon atoms, a substituted or unsubstituted branched alkyl radical of 3 or 4 carbon atoms, an aryl radical of 6 to 20 carbon atoms, or the radical $R^1$, and
$R^1$ is the radical

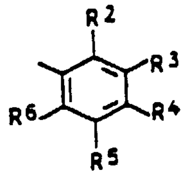

the radicals
$R^2$ to $R^6$ being identical to or different from one another and being H, alkyl of 1 to 4 carbon atoms or phenyl, with the proviso that at least one but not more than three of the radicals $R^2$ to $R^6$ are the radical

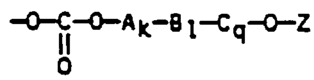

in which A, B and C are identical to or different from one another and are divalent oxaalkylene radicals of the formula

$$\{CHR^a\text{-}CHR^b\text{-}O\}_y$$

in which $R^a$ and $R^b$ can be identical to or different from one another and can be H, OH, aryl, COOH, $COOCH_3$, $COOC_2H_5$ or alkyl of 1 to 4 carbon atoms and y is from 1 to 80, or are $-(CH_2)_n-O-(CH_2)_p-$ where n is from 1 to 5 and p is from 1 to 5
or are a polyoxaalkylene radical of 2 to 20 oxygen atoms which are linked to one another via at least one $-CH_2-$ or $-CH_2-CH(CH_3)-$ group, or are a radical $-(CH_2)_m-O-CO-O-(CH_2)_n-$, - $-(CH_2)_n-O-CO-NH-(CH_2)_m-$, $-(CH_2)_n-NH-CO-O-(CH_2)_m-$, - $(CH_2)_m-CO-O-(CH_2)_n-$ or $-(CH_2)_m-O-CO-(CH_2)_n-$ where m is from 1 to 10 and n is from 1 to 10, or are a substituted or unsubstituted cycloalkylene radical of 5 to 10 carbon atoms, or are a (bis)methylenecycloalkylene radical of 6 to 12 carbon atoms or are a substituted or unsubstituted o-, m- or p-phenylene radical, k, l and q are serial numbers from 1 to 80 and $A_k$ and $C_q$ can also be single bonds, at least one of the radicals $A_k$, $B_l$ and $C_q$ containing at least two oxygen atoms,

Z is H, alkyl of in each case 1 to 6 carbon atoms in the alkyl group, phenyl, phenyl substituted with straight-chain or branched alkyl containing from 1 to 20 carbon atoms, or

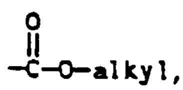 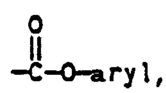 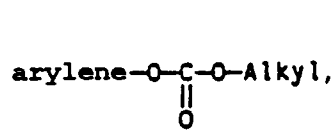

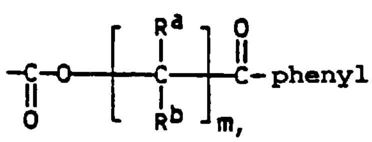 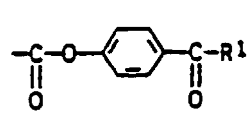

or
in which alkyl can contain from 1 to 8 carbon atoms and aryl from 6 to 18 carbon atoms, or, where R is an aryl radical, one of the radicals $R^2$ or $R^6$ can be a sulfur atom through which the aryl radical is connected in ortho-position to $R^1$.

**2.** A process for preparing coatings and impregnations, which comprises subjecting an aqueous polymer dispersion as claimed in claim 1, which may comprise adjuvants and/or pigments, during and/or after its drying to irradiation by UV light and/or natural sunlight.

**3.** A coating system for the production of coatings which during and/or after their drying are subjected to irradiation

by UV light and/or natural sunlight, which system comprises an aqueous polymer dispersion as claimed in claim 1, the copolymer prior to crosslinking having a glass transition temperature of from -35 to +70°C.

**4.** A coating system as claimed in claim 3, which additionally comprises zinc salt systems and/or other crosslinking systems.

**5.** A process as claimed in claim 2 for coating concrete roof tiles which have not set, wherein a mixture of

A) a from 20 to 65% by weight aqueous dispersion of a copolymer of

(a) from 0.5 to 5% by weight of units of carboxyl-and/or amide-containing olefinically unsaturated compounds and
(b) from 0.1 to 5% by weight of units of carbonyl-containing monomers which are crosslinked with dihydrazides of aliphatic dicarboxylic acids containing from 2 to 10 carbon atoms, and
(c) the difference up to 100% by weight of units of at least two monomers from the group consisting of acrylic and methacrylic esters of $C_1$-$C_{18}$-alkanols and aromatic vinyl compounds which are selected such that, and in proportions such that, the copolymer prior to crosslinking has a glass transition temperature of from -35 to +30°C, and

B) from 0.1 to 3% by weight, based on the quantity of the copolymer in component (A), of aromatic ketones of the general formula (I) as set forth in claim 1

is applied to the concrete roof tiles which have not set, and the coating, during and/or after its drying, is subjected to irradiation by UV light and/or natural sunlight.

**6.** A process as claimed in claim 2, wherein concrete roof tiles which have not set are coated with a mixture of

A) a from 20 to 65% by weight aqueous dispersion of a copolymer of

(a) from 0.5 to 5% by weight of units of carboxyl-and/or amide-containing olefinically unsaturated compounds and
(b) the difference up to 100% by weight of units of at least two monomers from the group consisting of acrylic and methacrylic esters of $C_1$-$C_{18}$-alkanols and aromatic vinyl compounds which are selected such that, and in proportions such that, the copolymer prior to crosslinking has a glass transition temperature of from -35 to +30°C, and

B) from 0.1 to 3% by weight, based on the quantity of the copolymer in component (A), of aromatic ketones of the general formula (I)

and the coating during and/or after its drying is subjected to irradiation by UV light and/or natural sunlight.

**7.** A process as claimed in claim 2, wherein a mixture of

A) a from 20 to 65% by weight aqueous dispersion of a copolymer of

(a) from 0.5 to 5% by weight of units of carboxyl-and/or amide-containing olefinically unsaturated compounds and
(b) the difference up to 100% by weight of units of at least two monomers from the group of acrylic and methacrylic esters of $C_1$-$C_{18}$-alkanols and aromatic vinyl compounds which are selected such that, and in proportions such that, the copolymer prior to crosslinking has a glass transition temperature of from -35 to +70°C,

B) from 0.1 to 3% by weight, based on the quantity of the copolymer in component (A), of aromatic ketones of the following structure

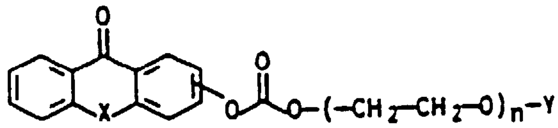

or

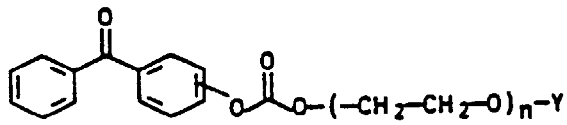

or

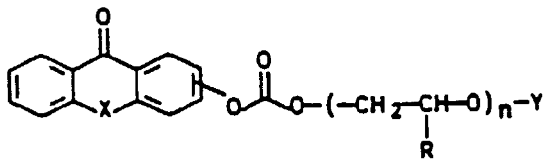

or

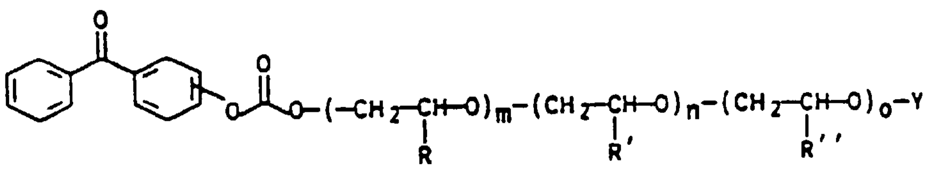

or

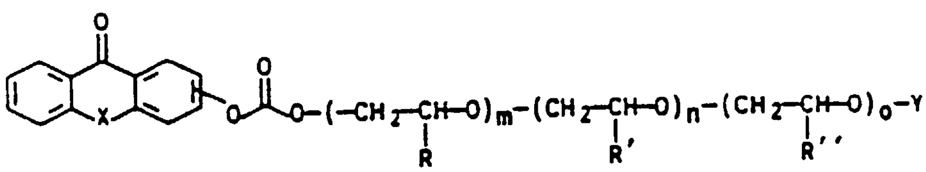

or

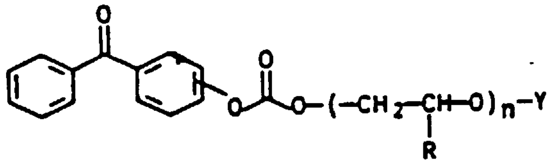

where X is O, S, NH or NR,
R is H or alkyl of 1 to 8 carbon atoms is R', R"
Y is H, alkyl of 1 to 8 carbon atoms, phenyl or substituted phenyl having up to 20 carbon atoms in the substituent,

or

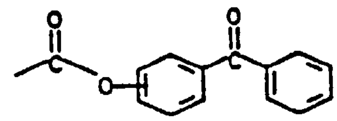

n is from 1 to 80, m is from 1 to 80, o is from 1 to 80 and, if desired,

C) additionally, zinc salt systems and/or other crosslinking systems is used and the coating during and/or after its drying is subjected to irradiation by UV light and/or natural sunlight.

**8.** An aromatic ketone of the general formula (I)

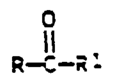

(I),

in which

R is a straight-chain alkyl radical of 1 to 4 carbon atoms, a substituted or unsubstituted branched alkyl radical of 3 or 4 carbon atoms, an aryl radical of 6 to 20 carbon atoms, or the radical $R^1$, and

$R^1$ is the radical

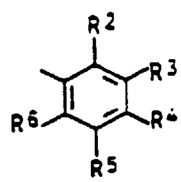

the radicals

$R^2$ to $R^6$ being identical to or different from one another and being H, alkyl of 1 to 4 carbon atoms or phenyl, with the proviso that at least one, but not more than three, of the radicals $R^2$ to $R^6$ are the radical

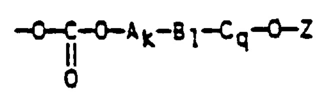

in which A, B and C are identical to or different from one another and are divalent oxaalkylene radicals of the formula

$$\{CHR^a\text{-}CHR^b\text{-}O\}_y$$

in which $R^a$ and $R^b$ can be identical to or different from one another and can be H, OH, aryl, COOH, $COOCH_3$, $COOC_2H_5$ or alkyl of 1 to 4 carbon atoms and y is from 1 to 80, or are

$-(CH_2)_n-O-(CH_2)_p-$ where n is from 1 to 5 and p is from 1 to 5

or are a polyoxaalkylene radical of 2 to 20 oxygen atoms which are linked to one another via at least one $-CH_2-$ or $-CH_2-CH(CH_3)-$ group, or are a radical $-(CH_2)_m-O-CO-O-(CH_2)_n-$, $-(CH_2)_n-O-CO-NH-(CH_2)_m$, $-(CH_2)_n-N-CO-O-(CH_2)_m-$, $-(CH_2)_m-CO-O-(CH_2)_n-$ or $-(CH_2)_m-O-CO-(CH_2)_n-$ where m is from 1 to 10 and n is from 1 to 10, or are a substituted or unsubstituted cycloalkylene radical of 5 to 10 carbon atoms, or are a (bis) methylenecycloalkylene radical of 6 to 12 carbon atoms or are a substituted or unsubstituted o-, m- or p-phenylene radical, k, l and q are serial numbers from 1 to 80 and $A_k$ and $C_q$ can also be single bonds, at least

one of the radicals $A_k$, $B_l$ and $C_q$ containing at least two oxygen atoms,

Z is H, alkyl of in each case 1 to 6 carbon atoms in the alkyl group, phenyl, phenyl substituted with straight-chain or branched alkyl containing from 1 to 20 carbon atoms, or

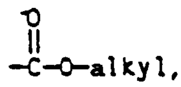, 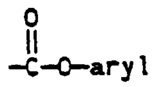, 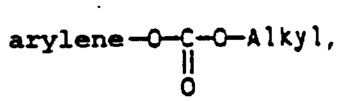,

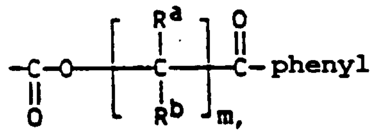 or 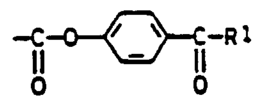

in which alkyl can contain from 1 to 8 carbon atoms and aryl from 6 to 18 carbon atoms, or, where R is an aryl radical, one of the radicals $R^2$ or $R^6$ can be a sulfur atom through which the aryl radical is connected in ortho-position to $R^1$.

**Claims for the following Contracting State : ES**

1. A process for preparing an aqueous polymer dispersion which may comprise adjuvants and/or pigments, which comprises incorporating, into a from 20 to 65% by weight aqueous dispersion

(A) of a copolymer of

(a) from 0.5 to 5% by weight of units of carboxyl-and/or amide-containing olefinically unsaturated compounds and
(b) the difference up to 100% by weight of units of at least two monomers from the group consisting of acrylic and methacrylic esters of $C_1$-$C_{18}$-alkanols and aromatic vinyl compounds,

as component (B) from 0.1 to 5% by weight, based on the quantity of copolymer in component (A), of at least one aromatic ketone of the general formula (I)

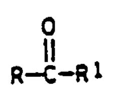 (I),

in which

R is a straight-chain alkyl radical of 1 to 4 carbon atoms, a substituted or unsubstituted branched alkyl radical of 3 or 4 carbon atoms, an aryl radical of 6 to 20 carbon atoms, or the radical $R^1$, and
$R^1$ is the radical

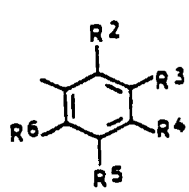

the radicals
$R^2$ to $R^6$ being identical to or different from one another and being H, alkyl of 1 to 4 carbon atoms or phenyl, with the proviso that at least one, but not more than three, of the radicals $R^2$ to $R^6$ are the radical

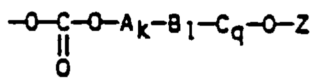

in which A, B and C are identical to or different from one another and are divalent oxaalkylene radicals of the formula

$$\{CHR^a\text{-}CHR^b\text{-}O\}_y$$

in which $R^a$ and $R^b$ can be identical to or different from one another and can be H, OH, aryl, COOH, $COOCH_3$, $COOC_2H_5$ or alkyl of 1 to 4 carbon atoms and y is from 1 to 80, or are
$-(CH_2)_n-O-(CH_2)_p-$ where n is from 1 to 5 and p is from 1 to 5
or are a polyoxaalkylene radical of 2 to 20 oxygen atoms which are linked to one another via at least one $-CH_2-$ or $-CH_2-CH(CH_3)-$ group, or are a radical $-(CH_2)_m-O-CO-O-(CH_2)_n-$, $-(CH_2)_n-O-CO-NH-(CH_2)_m-$, $-(CH_2)_n-NH-CO-O-(CH_2)_m-$, $-(CH_2)_m-CO-O-(CH_2)_n-$ or $-(CH_2)_m-O-CO-(CH_2)_n-$ where m is from 1 to 10 and n is from 1 to 10, or are a substituted or unsubstituted cycloalkylene radical of 5 to 10 carbon atoms, or are a (bis)methylenecycloalkylene radical of 6 to 12 carbon atoms or are a substituted or unsubstituted o-, m- or p-phenylene radical, k, l and q are serial numbers from 1 to 80 and $A_k$ and $C_q$ can also be single bonds, at least one of the radicals $A_k$, $B_l$ and $C_q$ containing at least two oxygen atoms,

Z is H, alkyl of in each case 1 to 6 carbon atoms in the alkyl group, phenyl, phenyl substituted with straight-chain or branched alkyl containing from 1 to 20 carbon atoms, or

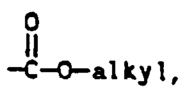, 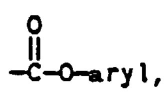, 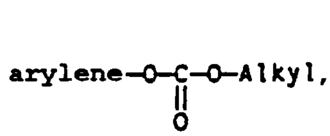,

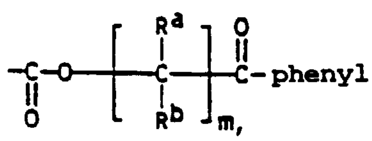 or 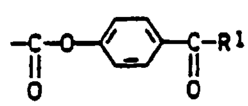

in which alkyl can contain from 1 to 8 carbon atoms and aryl from 6 to 18 carbon atoms, or, where R is an aryl radical, one of the radicals $R^2$ or $R^6$ can be a sulfur atom through which the aryl radical is connected in ortho-position to $R^1$.

**2.** A process for preparing coatings and impregnations, which comprises subjecting an aqueous polymer dispersion obtainable by a process as claimed in claim 1, which may comprise adjuvants and/or pigments, during and/or after its drying to irradiation by UV light and/or natural sunlight.

**3.** A process as claimed in claim 1, wherein the copolymer of the aqueous dispersion A) has a glass transition temperature of from -35 to +70°C.

**4.** A process as claimed in claim 3, wherein zinc salt systems and/or other crosslinking systems are additionally incorporated.

**5.** A process as claimed in claim 2 for coating concrete roof tiles which have not set, wherein a mixture of a from 20 to 65% by weight aqueous dispersion A) of a copolymer of

(a) from 0.5 to 5% by weight of units of carboxyl-and/or amide-containing olefinically unsaturated compounds and
(b) from 0.1 to 5% by weight of units of carbonyl-containing monomers which are crosslinked with dihydrazides of aliphatic dicarboxylic acids of 2 to 10 carbon atoms, and
(c) the difference up to 100% by weight of units of at least two monomers from the group consisting of acrylic and methacrylic esters of $C_1$-$C_{18}$-alkanols and aromatic vinyl compounds which are selected such that, and in proportions such that, the copolymer prior to crosslinking has a glass transition temperature of from -35 to +30°C,

and as component B) from 0.1 to 3% by weight, based on the quantity of the copolymer in component (A), of aromatic ketones of the general formula (I) as set forth in claim 1 is applied to the concrete roof tiles which have not set, and the coating, during and/or after its drying, is subjected to irradiation by UV light and/or natural sunlight.

**6.** A process as claimed in claim 2, wherein concrete roof tiles which have not set are coated with a mixture of a from 20 to 65% by weight aqueous dispersion A) of a copolymer of

(a) from 0.5 to 5% by weight of units of carboxyl-and/or amide-containing olefinically unsaturated compounds and
(b) the difference up to 100% by weight of units of at least two monomers from the group of acrylic and methacrylic esters of $C_1$-$C_{18}$-alkanols and aromatic vinyl compounds which are selected such that, and in proportions such that, the copolymer prior to crosslinking has a glass transition temperature of from -35 to +30°C, and

as component B) from 0.1 to 3% by weight, based on the quantity of the copolymer in component (A), of aromatic ketones of the general formula (I) and the coating during and/or after this drying is subjected to irradiation by UV light and/or natural sunlight.

**7.** A process as claimed in claim 2, wherein a mixture of a from 20 to 65% by weight aqueous dispersion

A) of a copolymer of

(a) from 0.5 to 5% by weight of units of carboxyl-and/or amide-containing olefinically unsaturated compounds and
(b) the difference up to 100% by weight of units of at least two monomers from the group of acrylic and methacrylic esters of $C_1$-$C_{18}$-alkanols and aromatic vinyl compounds which are selected such that, and in proportions such that, the copolymer prior to crosslinking has a glass transition temperature of from -35 to +70°C,

and as component B) from 0.1 to 3% by weight, based on the quantity of the copolymer in component (A), of aromatic ketones of the following structure

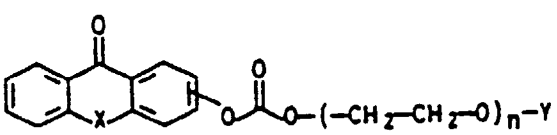

or

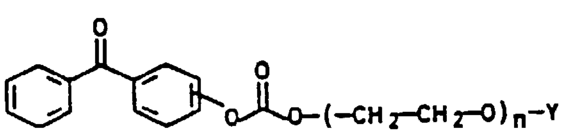

or

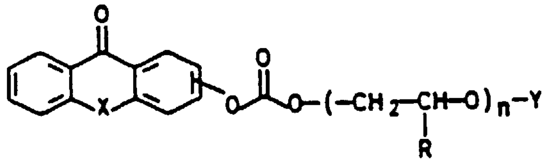

or

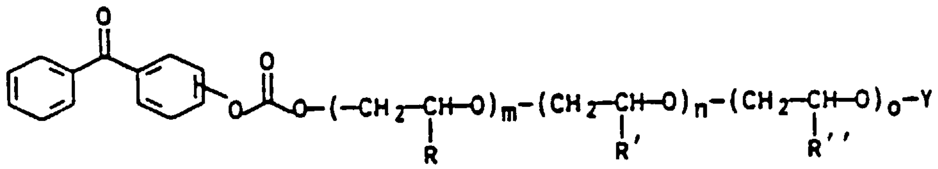

or

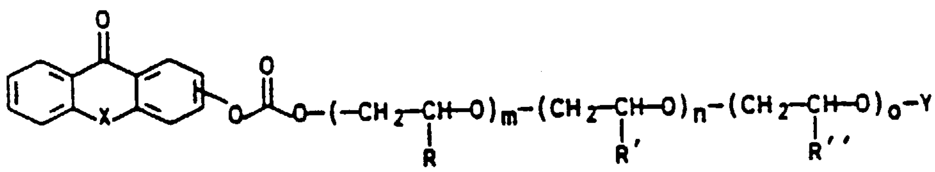

or

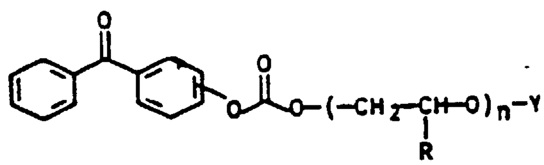

where X is O, S, NH or NR,
R is H or alkyl of 1 to 8 carbon atoms and is identical to R', R''
Y is H, alkyl of 1 to 8 carbon atoms, phenyl or substituted phenyl having up to 20 carbon atoms in the substituent, or

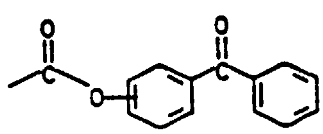

n is from 1 to 80, m is from 1 to 80, o is from 1 to 80 and, if desired,
C) additionally, zinc salt systems and/or other crosslinking systems

is used and the coating during and/or after its drying is irradiated by UV light and/or natural sunlight.

**8.** A process for preparing an aromatic ketone of the general formula (I)

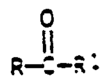 (I),

in which

R is a straight-chain alkyl radical of 1 to 4 carbon atoms, a substituted or unsubstituted branched alkyl radical of 3 or 4 carbon atoms, an aryl radical of 6 to 20 carbon atoms, or the radical $R^1$, and

$R^1$ is the radical

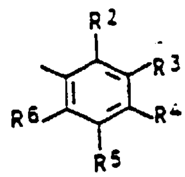

the radicals

$R^2$ to $R^6$ being identical to or different from one another and being H, alkyl of 1 to 4 carbon atoms or phenyl, with the proviso that at least one, but not more than three, of the radicals $R^2$ to $R^6$ are the radical

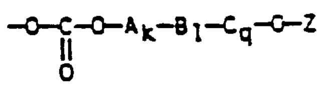

in which A, B and C are identical to or different from one another and are divalent oxaalkylene radicals of the formula

$$\{CHR^a\text{-}CHR^b\text{-}O\}_y$$

in which $R^a$ and $R^b$ can be identical to or different from one another and can be H, OH, aryl, COOH, $COOCH_3$, $COOC_2H_5$ or alkyl of 1 to 4 carbon atoms and y is from 1 to 80, or are

$-(CH_2)_n-O-(CH_2)_p-$ where n is from 1 to 5 and p is from 1 to 5

or are a polyoxaalkylene radical of 2 to 20 oxygen atoms which are linked to one another via at least one $-CH_2-$ or $-CH_2-CH(CH_3)$ - group, or are a radical - $(CH_2)_m-O-CO-O-(CH_2)_n-$, $-(CH_2)_n-O-CO-NH-(CH_2)_m-$, $-(CH_2)_n-NH-CO-O-(CH_2)_m-$, $-(CH_2)_m-CO-O-(CH_2)_n-$ or $-(CH_2)_m-O-CO-(CH_2)_n-$ where m is from 1 to 10 and n is from 1 to 10, or are a substituted or unsubstituted cycloalkylene radical of 5 to 10 carbon atoms, or are a (bis)methylenecycloalkylene radical of 6 to 12 carbon atoms or are a substituted or unsubstituted o-, m- or p-phenylene radical, k, l and q are serial numbers from 1 to 80 and $A_k$ and $C_q$ can also be single bonds, at least one of the radicals $A_k$, $B_l$ and $C_q$ containing at least two oxygen atoms,

Z is H, alkyl of in each case 1 to 6 carbon atoms in the alkyl group, phenyl, phenyl substituted with straight-chain or branched alkyl containing from 1 to 20 carbon atoms, or

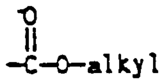, 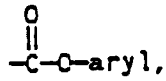, 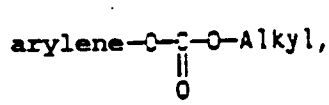,

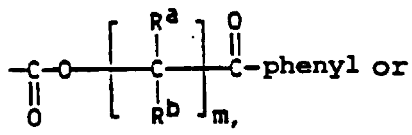 or 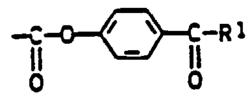

in which alkyl can contain from 1 to 8 carbon atoms and aryl from 6 to 18 carbon atoms, or, where R is an aryl radical, one of the radicals $R^2$ or $R^6$ can be a sulfur atom through which the aryl radical is connected in ortho-position to $R^1$.

## Revendications

**Revendications pour les Etats contractants suivants : AT, BE, CH, DE, FR, GB, IT, LI, NL, SE**

**1.** Dispersion aqueuse de polymère, qui contient éventuellement des additifs et/ou des pigments, caractérisée en ce qu'elle se compose, en essence, d'un mélange constitué de

A) une dispersion aqueuse à 20-65% en poids d'un copolymère de

(a) 0,5 à 5% en poids d'unités provenant de composés oléfiniquement insaturés contenant des radicaux carboxyle et/ou amide, et
(b) la différence, jusqu'à 100% en poids, d'unités d'au moins deux monomères appartenant aux esters de l'acide acrylique et de l'acide méthacrylique d'alcanols en $C_1$ à $C_{18}$ et de composés vinylaromatiques, et

B) 0,1 à 5% en poids, par rapport à la quantité du copolymère contenu dans le composant (A), d'au moins une cétone aromatique de la formule générale (I) :

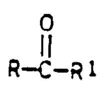 (I)

dans laquelle

R représente un radical alkyle linéaire comportant de 1 à 4 atomes de carbone, un radical alkyle, ramifié, éventuellement substitué, comportant 3 ou 4 atomes de carbone, un radical aryle comportant de 6 à 20 atomes de carbone ou le radical $R^1$, et
$R^1$ représente le radical

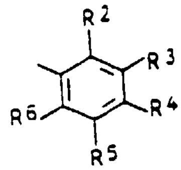

où les symboles

$R^2$ à $R^6$ sont mutuellement identiques ou différents et représentent chacun un atome d'hydrogène, un radical alkyle possédant de 1 à 4 atomes de carbone, ou un radical phényle, avec la condition qu'au moins un, mais cependant au maximum trois, des symboles $R^2$ à $R^6$ représentent le groupe

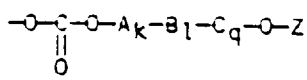

où A, B et C peuvent être identiques ou différents et représentent des groupes oxaalkylène bivalents de la formule :

$$\{CHR^a\text{-}CHR^b\text{-}O\}_y$$

dans laquelle $R^a$ et $R^b$ peuvent être identiques ou différents et représentent chacun un atome d'hydrogène, un radical OH, aryle, COOH, $COOCH_3$, $COOC_2H_5$ ou alkyle comportant de 1 à 4 atomes de carbone et y = 1 à 80,

$$-(CH_2)_n\text{-}O\text{-}(CH_2)_p-$$

avec n = 1 à 5 et p = 1 à 5 où un radical polyoxaalkylène comportant de 2 à 20 atomes d'oxygène qui sont mutuellement reliés par l'intermédiaire d'au moins un groupe $-CH_2-$, ou $-CH_2\text{-}CH(CH_3)-$, un radical $-(CH_2)_m\text{-}O\text{-}CO\text{-}O\text{-}(CH_2)_n-$, $-(CH_2)_n\text{-}O\text{-}CO\text{-}NH\text{-}(CH_2)_m-$, $-(CH_2)_n\text{-}NH\text{-}CO\text{-}O\text{-}(CH_2)_m-$, $-(CH_2)_m\text{-}CO\text{-}O\text{-}(CH_2)_n-$ ou $-(CH_2)_m\text{-}O\text{-}CO\text{-}(CH_2)_n-$ avec m = 1 à 10, n = 1 à 10, un radical cycloalkylène comportant de 5 à 10 atomes de carbone éventuellement substitué, un radical (bis)méthylènecycloalkylène comportant de 6 à 12 atomes de carbone, ou un radical o-, m- ou p-phénylène comportant de 6 à 12 atomes de carbone, k, l et q représentent des nombres courants de 1 à 80 et $A_k$ et $C_q$ peuvent également représenter de simples liaisons, où au moins l'un des restes $A_k$, $B_l$ et $C_q$ contient au moins deux atomes d'oxygène,
Z représente un atome d'hydrogène, un radical alkyle comportant à chaque fois de 1 à 6 atomes de carbone dans le radical alkyle, phényle, phényle substitué par des radicaux alkyle linéaires ou ramifiés contenant de 1 à 20 atomes de carbone, ou

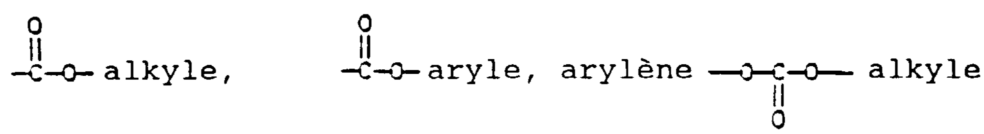

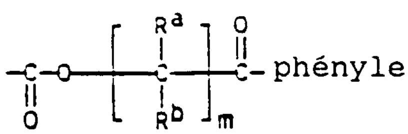

ou

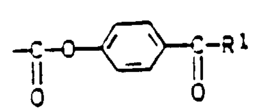

où alkyle peut contenir de 1 à 8 atomes de carbone, aryle peut contenir de 6 à 18 atomes de carbone, ou bien, dans le cas où R représente un radical aryle, l'un des symboles $R^2$ ou $R^6$ peut être un atome de soufre par lequel le reste aryle est lié à $R^1$ en position ortho.

2. Procédé de préparation de revêtements et d'imprégnations, caractérisé en ce que l'on expose des dispersions aqueuses de polymères suivant la revendication 1, qui contiennent éventuellement des additifs et/ou des pigments, pendant et/ou après leur séchage, à de la lumière UV et/ou de la lumière solaire naturelle.

3. Systèmes de peinture et de revêtement, pour la préparation de revêtements ou de peintures, que l'on expose pendant et/ou après leur séchage à de la lumière UV et/ou de la lumière solaire naturelle, caractérisés en ce qu'ils contiennent une dispersion aqueuse de polymère suivant la revendication 1, où le copolymère présente une température de transition vitreuse de -35 à +70°C avant la réticulation.

4. Systèmes de peinture suivant la revendication 3, caractérisés en ce qu'ils contiennent complémentairement un

système à base de sel de zinc et/ou d'autres systèmes de réticulation.

**5.** Procédé suivant la revendication 2 pour le revêtement de tuiles en béton n'ayant pas encore fait prise, caractérisé en ce que l'on applique un mélange constitué de

A) une dispersion aqueuse à 20-65% en poids d'un copolymère de

(a) 0,5 à 5% en poids d'unités de composés oléfiniquement insaturés contenant des radicaux carboxyle et/ou amide, et
(b) 0,1 à 5% en poids d'unités de monomères présentant des radicaux carbonyle, qui sont réticulés avec des dihydrazides d'acides dicarboxyliques aliphatiques, contenant de 2 à 10 atomes de carbone, et
(c) la différence, jusqu'à 100% en poids, d'unités d'au moins deux monomères appartenant au groupe des esters de l'acide acrylique et de l'acide méthacrylique d'alcanols en $C_1$ à $C_{18}$ et de composés vinylaromatiques, en un choix tel et en proportions quantitatives telles que le copolymère présente une température de transition vitreuse de -35 à +30°C avant la réticulation, et

B) 0,1 à 3% en poids, par rapport à la quantité du copolymère contenu dans le composant (A), de cétones aromatiques de la formule générale (I) présentée dans la revendication 1,
sur les tuiles en béton n'ayant pas fait prise et on expose le revêtement, pendant et/ou après son séchage, à de la lumière UV et/ou de lumière solaire naturelle.

**6.** Procédé suivant la revendication 2, caractérisé en ce que l'on applique sur les tuiles en béton n'ayant pas fait prise, un revêtement qui se compose d'un mélange de

A) une dispersion aqueuse à 20-65% en poids d'un copolymère de

(a) 0,5 à 5% en poids d'unités de composés oléfiniquement insaturés contenant des radicaux carboxyle et/ou amide, et
(b) la différence, jusqu'à 100% en poids, d'unités d'au moins deux monomères appartenant aux esters de l'acide acrylique et de l'acide méthacrylique d'alcanols en $C_1$ à $C_{18}$ et de composés vinylaromatiques, en un choix tel et en proportions quantitatives telles que le copolymère présente une température de transition vitreuse de -35 à +30°C avant la réticulation, et

B) 0,1 à 3% en poids, par rapport à la quantité du copolymère contenu dans le composant (A), de cétones aromatiques de la formule générale (I),
et on expose le revêtement ou les peintures, pendant et/ou après leur séchage, à de la lumière UV et/ou de la lumière solaire naturelle.

**7.** Procédé suivant la revendication 2, caractérisé en ce que l'on utilise un mélange constitué de

A) une dispersion aqueuse à 20-65% en poids d'un copolymère de

(a) 0,5 à 5% en poids d'unités de composé oléfiniquement insaturés contenant des radicaux carboxyle et/ou amide, et
(b) la différence, jusqu'à 100% en poids, d'unités d'au moins deux monomères appartenant au groupe des esters de l'acide acrylique et de l'acide méthacrylique d'alcanols en $C_1$ à $C_{18}$ et de composés vinylaromatiques, en un choix tel et en proportions quantitatives telles que le copolymère présente une température de transition vitreuse de -35 à +70°C avant la réticulation, et

B) 0,1 à 3% en poids, par rapport à la quantité du copolymère contenu dans le composant (A), de cétones aromatiques de la structure suivante :

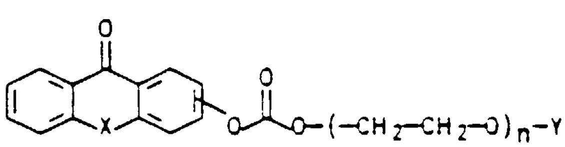

ou

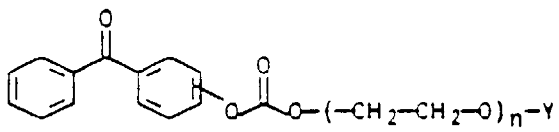

ou

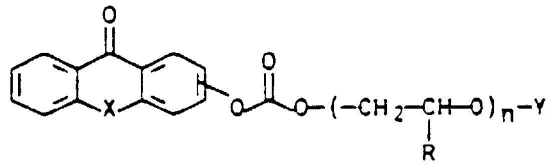

ou

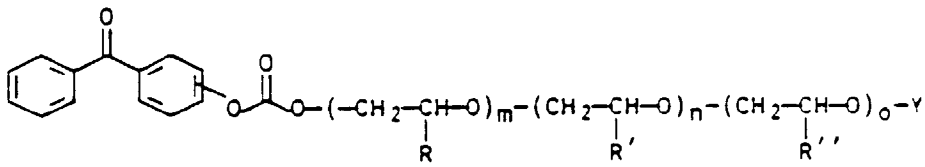

ou

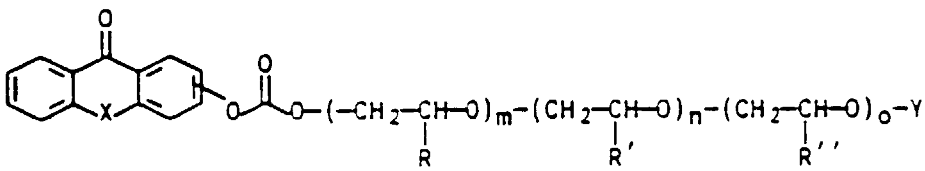

ou

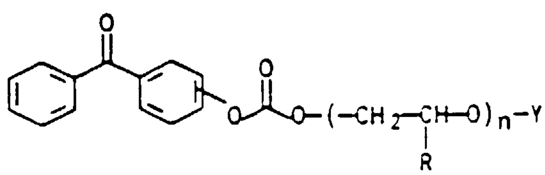

avec

X = O, S, NH ou NR,
R = H, alkyle à 1-8 atomes de carbone = R', R"
Y = H, alkyle à 1-8 atomes de carbone, phényle ou phényle substitué avec jusqu'à 20 atomes de carbone dans le substituant, ou

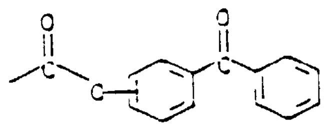

n = 1 à 80, m = 1 à 80, o = 1 à 80
et, éventuellement,
C) complémentairement des systèmes à base de sel de zinc et/ou d'autres systèmes de réticulation,
et on expose le revêtement ou les peintures, pendant et/ou après leur séchage, à de la lumière UV et/ou de la lumière solaire naturelle.

**8.** Cétone aromatique de la formule générale (I) :

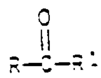

(I)

dans laquelle

R représente un radical alkyle linéaire comportant de 1 à 4 atomes de carbone, un radical alkyle, ramifié, éventuellement substitué, comportant 3 ou 4 atomes de carbone, un radical aryle comportant de 6 à 20 atomes de carbone ou le radical $R^1$ et
$R^1$ représente le radical

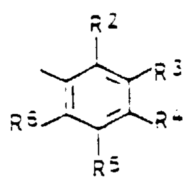

où les symboles
$R^2$ à $R^6$ sont mutuellement identiques ou différents et représentent chacun un atome d'hydrogène, un radical alkyle possédant de 1 à 4 atomes de carbone, ou un radical phényle, avec la condition qu'au moins un, mais cependant au maximum trois, des symboles $R^2$ à $R^6$ représentent le groupe

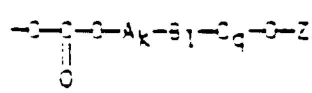

où A, B et C peuvent être identiques ou différents et représentent
des groupes oxaalkylène bivalents de la formule :

$$\{CHR^a\text{-}CHR^b\text{-}O\}_y$$

dans laquelle $R^a$ et $R^b$ peuvent être identiques ou différents et représentent chacun un atome d'hydrogène, un radical OH, aryle, COOH, $COOCH_3$, $COOC_2H_5$ ou alkyle comportant de 1 à 4 atomes de carbone et y = 1 à 80,

$$-(CH_2)_n\text{-}O\text{-}(CH_2)_p\text{-}$$

avec n = 1 à 5 et p = 1 à 5 où un radical polyoxaalkylène comportant de 2 à 20 atomes d'oxygène qui sont

mutuellement reliés par l'intermédiaire d'au moins un groupe $-CH_2-$, ou $-CH_2-CH(CH_3)-$, un radical $-(CH_2)_m-O-CO-O-(CH_2)_n-$, $-(CH_2)_n-O-CO-NH-(CH_2)_m-$, $-(CH_2)_n-NH-CO-O-(CH_2)_m-$, $-(CH_2)_m-CO-O-(CH_2)_n-$ ou $-(CH_2)_m-O-CO-(CH_2)_n-$ avec m = 1 à 10, n = 1 à 10, un radical cycloalkylène comportant de 5 à 10 atomes de carbone éventuellement substitué, un radical (bis)méthylènecycloalkylène comportant de 6 à 12 atomes de carbone, ou un radical o-, m- ou p-phénylène comportant de 6 à 12 atomes de carbone, k, l et q représentent des nombres courants de 1 à 80 et $A_k$ et $C_q$ peuvent également représenter de simples liaisons, où au moins l'un des restes $A_k$, $B_l$ et $C_q$ contient au moins deux atomes d'oxygène,

Z représente un atome d'hydrogène, un radical alkyle comportant à chaque fois de 1 à 6 atomes de carbone dans le radical alkyle, phényle, phényle substitué par des radicaux alkyle linéaires ou ramifiés contenant de 1 à 20 atomes de carbone, ou

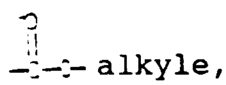 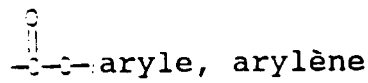 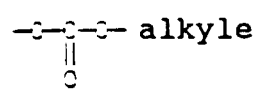

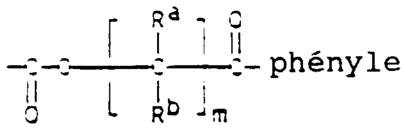 ou 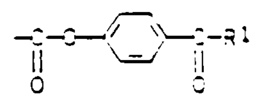

où alkyle peut contenir de 1 à 8 atomes de carbone, aryle peut contenir de 6 à 18 atomes de carbone, ou bien, dans le cas où R représente un radical aryle, l'un des symboles $R^2$ ou $R^6$ peut être un atome de soufre par lequel le reste aryle est lié à $R^1$ en position ortho.

**Revendications pour l'Etat contractant suivant : ES**

1. Procédé de préparation d'une dispersion aqueuse de polymère, qui contient éventuellement des additifs et/ou des pigments, caractérisé en ce que, à une dispersion aqueuse (A) à 20-65% en poids d'un copolymère de

(a) 0,5 à 5% en poids d'unités provenant de composés oléfiniquement insaturés contenant des radicaux carboxyle et/ou amide, et

(b) la différence, jusqu'à 100% en poids, d'unités d'au moins deux monomères appartenant aux esters de l'acide acrylique et de l'acide méthacrylique d'alcanols en $C_1$ à $C_{18}$ et de composés vinylaromatiques,

on incorpore, à titre de composant (B), 0,1 à 5% en poids, par rapport à la quantité du copolymère contenu dans le composant (A), d'au moins une cétone aromatique de la formule générale (I) :

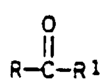 (I)

dans laquelle

R représente un radical alkyle linéaire comportant de 1 à 4 atomes de carbone, un radical alkyle, ramifié, éventuellement substitué, comportant 3 ou 4 atomes de carbone, un radical aryle comportant de 6 à 20 atomes de carbone ou le radical $R^1$, et

$R^1$ représente le radical

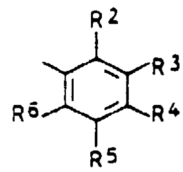

où les symboles
$R^2$ à $R^6$ sont mutuellement identiques ou différents et représentent chacun un atome d'hydrogène, un radical alkyle possédant de 1 à 4 atomes de carbone, ou un radical phényle, avec la condition qu'au moins un, mais cependant au maximum trois, des symboles $R^2$ à $R^6$ représentent le groupe

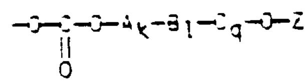

où A, B et C peuvent être identiques ou différents et représentent
des groupes oxaalkylène bivalents de la formule :

$$\{CHR^a\text{-}CHR^b\text{-}O\}_y$$

dans laquelle $R^a$ et $R^b$ peuvent être identiques ou différents et représentent chacun un atome d'hydrogène, un radical OH, aryle, COOH, $COOCH_3$, $COOC_2H_5$ ou alkyle comportant de 1 à 4 atomes de carbone et y = 1 à 80,

$$-(CH_2)_n\text{-}O\text{-}(CH_2)_p-$$

avec n = 1 à 5 et p = 1 à 5 où un radical polyoxaalkylène comportant de 2 à 20 atomes d'oxygène qui sont mutuellement reliés par l'intermédiaire d'au moins un groupe $-CH_2-$, ou $-CH_2-CH(CH_3)-$, un radical $-(CH_2)_m-O-CO-O-(CH_2)_n-$, $-(CH_2)_n-O-CO-NH-(CH_2)_m-$, $-(CH_2)_n-NH-CO-O-(CH_2)_m-$, $-(CH_2)_m-CO-O-(CH_2)_n-$ ou $-(CH_2)_m-O-CO-(CH_2)_n-$ avec m = 1 à 10, n = 1 à 10, un radical cycloalkylène comportant de 5 à 10 atomes de carbone éventuellement substitué, un radical (bis)méthylènecycloalkylène comportant de 6 à 12 atomes de carbone, ou un radical o-, m- ou p-phénylène comportant de 6 à 12 atomes de carbone, k, l et q représentent des nombres courants de 1 à 80 et $A_k$ et $C_q$ peuvent également représenter de simples liaisons, où au moins l'un des restes $A_k$, $B_l$ et $C_q$ contient au moins deux atomes d'oxygène,
Z représente un atome d'hydrogène, un radical alkyle comportant à chaque fois de 1 à 6 atomes de carbone dans le radical alkyle, phényle, phényle substitué par des radicaux alkyle linéaires ou ramifiés contenant de 1 à 20 atomes de carbone, ou

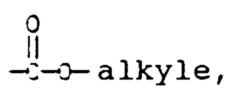, 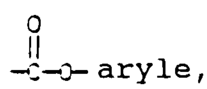, 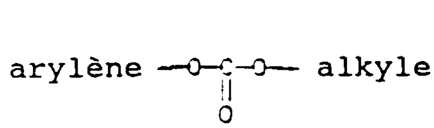

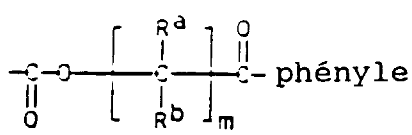 ou 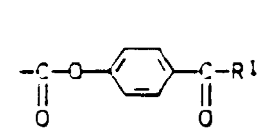

où alkyle peut contenir de 1 à 8 atomes de carbone, aryle peut contenir de 6 à 18 atomes de carbone, ou bien, dans le cas où R représente un radical aryle, l'un des symboles $R^2$ ou $R^6$ peut être un atome de soufre par lequel le reste aryle est lié à $R^1$ en position ortho.

2. Procédé de préparation de revêtements et d'imprégnations, caractérisé en ce que l'on expose des dispersions aqueuses de polymères pouvant être obtenues par mise en oeuvre du procédé suivant la revendication 1, qui contiennent éventuellement des additifs et/ou des pigments, pendant et/ou après leur séchage, à de la lumière UV et/ou de la lumière solaire naturelle.

3. Procédé suivant la revendication 1, caractérisé en ce que la dispersion aqueuse de copolymère (A) présente une température de transition vitreuse de -35 à +70°C.

4. Procédé suivant la revendication 3, caractérisé en ce que l'on incorpore complémentairement des systèmes à base de sel de zinc et/ou d'autres systèmes de réticulation.

5. Procédé suivant la revendication 2 pour le revêtement de tuiles en béton n'ayant pas fait prise, caractérisé en ce que l'on applique un mélange d'une dispersion aqueuse à 20-65% en poids A) d'un copolymère de

   (a) 0,5 à 5% en poids d'unités de composés oléfiniquement insaturés contenant des radicaux carboxyle et/ou amide, et
   (b) 0,1 à 5% en poids d'unités de monomères présentant des radicaux carbonyle, qui sont réticulés avec des dihydrazides d'acides dicarboxyliques aliphatiques, contenant de 2 à 10 atomes de carbone, et
   (c) la différence, jusqu'à 100% en poids, d'unités d'au moins deux monomères appartenant au groupe des esters de l'acide acrylique et de l'acide méthacrylique d'alcanols en $C_1$ à $C_{18}$ et de composés vinylaromatiques, en un choix tel et en proportions quantitatives telles que le copolymère présente une température de transition vitreuse de -35 à +30°C avant la réticulation,

   et, à titre de composant B) de 0,1 à 3% en poids, par rapport à la quantité du copolymère contenu dans le composant (A), de cétones aromatiques de la formule générale (I) présentée dans la revendication 1, sur les tuiles en béton n'ayant pas fait prise et on expose le revêtement, pendant et/ou après son séchage, à de la lumière UV et/ou de lumière solaire naturelle.

6. Procédé suivant la revendication 2, caractérisé en ce que sur des tuiles de béton n'ayant pas fait prise, on applique un revêtement qui se compose d'un mélange d'une dispersion aqueuse à 20-65% en poids d'un copolymère de

   (a) 0,5 à 5% en poids d'unités de composés oléfiniquement insaturés contenant des radicaux carboxyle et/ou amide, et
   (b) la différence, jusqu'à 100% en poids, d'unités d'au moins deux monomères appartenant aux esters de l'acide acrylique et de l'acide méthacrylique d'alcanols en $C_1$ à $C_{18}$ et de composés vinylaromatiques, en un choix tel et en proportions quantitatives telles que le copolymère présente une température de transition vitreuse de -35 à +30°C avant la réticulation, et
   à titre de composant B) de 0,1 à 3% en poids, par rapport à la quantité du copolymère contenu dans le composant (A), de cétones aromatiques de la formule générale (I) et on expose le revêtement ou les peintures, pendant et/ou après leur séchage, à de la lumière UV et/ou de la lumière solaire naturelle.

7. Procédé suivant la revendication 2, caractérisé en ce que l'on utilise un mélange d'une dispersion aqueuse à 20-65% en poids A) d'un copolymère de

   (a) 0,5 à 5% en poids d'unités de composés oléfiniquement insaturés contenant des radicaux carboxyle et/ou amide, et
   (b) la différence, jusqu'à 100% en poids, d'unités d'au moins deux monomères appartenant au groupe des esters de l'acide acrylique et de l'acide méthacrylique d'alcanols en $C_1$ à $C_{18}$ et de composés vinylaromatiques, en un choix tel et en proportions quantitatives telles que le copolymère présente une température de transition vitreuse de -35 à +70°C avant la réticulation,

   et, à titre de composant B), de 0,1 à 3% en poids, par rapport à la quantité du copolymère contenu dans le composant (A), de cétones aromatiques de la structure suivante :

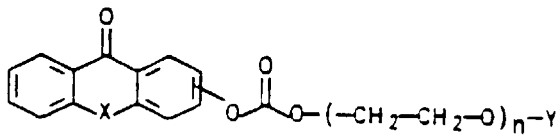

ou

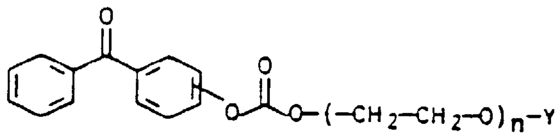

ou

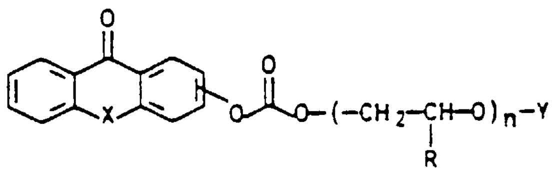

ou

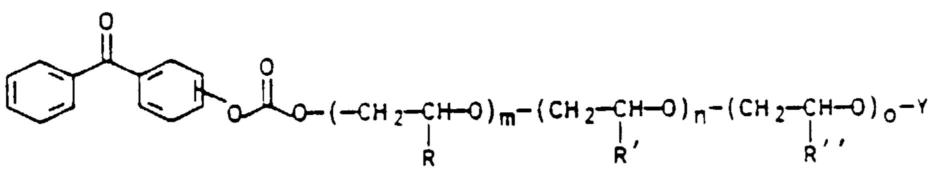

ou

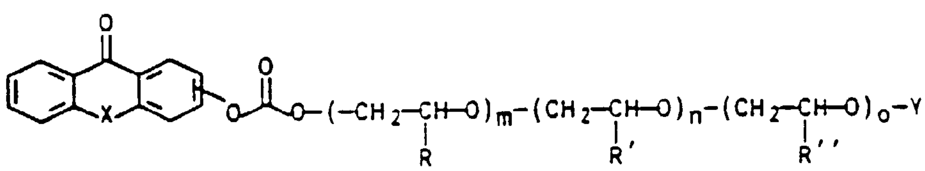

ou

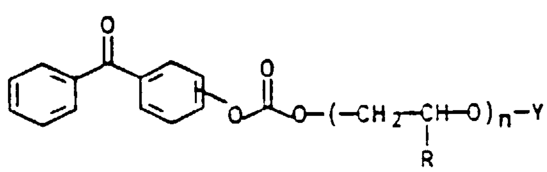

avec

X = O, S, NH ou NR,
R = H, alkyle à 1-8 atomes de carbone = R', R"
Y = H, alkyle à 1-8 atomes de carbone, phényle ou phényle substitué avec jusqu'à 20 atomes de carbone dans le substituant, ou

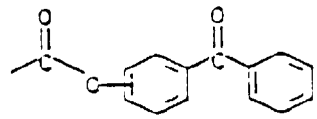

n = 1 à 80, m = 1 à 80, o = 1 à 80
et, éventuellement,
C) complémentairement des systèmes à base de sel de zinc et/ou d'autres systèmes de réticulation,
et on expose le revêtement ou les peintures, pendant et/ou après leur séchage, à de la lumière UV et/ou de la lumière solaire naturelle.

**8.** Procédé de préparation d'une cétone aromatique de la formule générale (I) :

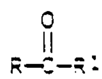

(I)

dans laquelle

R représente un radical alkyle linéaire comportant de 1 à 4 atomes de carbone, un radical alkyle, ramifié, éventuellement substitué, comportant 3 ou 4 atomes de carbone, un radical aryle comportant de 6 à 20 atomes de carbone ou le radical $R^1$, et
$R^1$ représente le radical

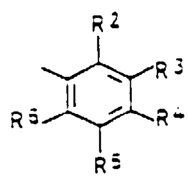

où les symboles
$R^2$ à $R^6$ sont mutuellement identiques ou différents et représentent chacun un atome d'hydrogène, un radical alkyle possédant de 1 à 4 atomes de carbone, ou un radical phényle, avec la condition qu'au moins un, mais cependant au maximum trois, des symboles $R^2$ à $R^6$ représentent le groupe

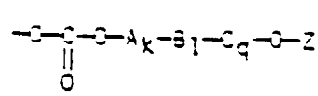

où A, B et C peuvent être identiques ou différents et représentent des groupes oxaalkylène bivalents de la formule :

$$\{CHR^a\text{-}CHR^b\text{-}O\}_y$$

dans laquelle $R^a$ et $R^b$ peuvent être identiques ou différents et représentent chacun un atome d'hydrogène, un radical OH, aryle, COOH, $COOCH_3$, $COOC_2H_5$ ou alkyle comportant de 1 à 4 atomes de carbone et y = 1 à 80,

$$-(CH_2)_n-O-(CH_2)_p-$$

avec n = 1 à 5 et p = 1 à 5 où un radical polyoxaalkylène comportant de 2 à 20 atomes d'oxygène qui sont mutuellement reliés par l'intermédiaire d'au moins un groupe $-CH_2-$, ou $-CH_2-CH(CH_3)-$, un radical $-(CH_2)_m-O-CO-O-(CH_2)_n-$, $-(CH_2)_n-O-CO-NH-(CH_2)_m-$, $-(CH_2)_n-NH-CO-O-(CH_2)_m-$, $-(CH_2)_m-CO-O-(CH_2)_n-$ ou $-(CH_2)_m-O-CO-(CH_2)_n-$ avec m = 1 à 10, n = 1 à 10, un radical cycloalkylène comportant de 5 à 10 atomes de carbone éventuellement substitué, un radical (bis)méthylènecycloalkylène comportant de 6 à 12 atomes de carbone, ou un radical o-, m- ou p-phénylène comportant de 6 à 12 atomes de carbone, k, l et q représentent des nombres courants de 1 à 80 et $A_k$ et $C_q$ peuvent également représenter de simples liaisons, où au moins l'un des restes $A_k$, $B_l$ et $C_q$ contient au moins deux atomes d'oxygène,
Z représente un atome d'hydrogène, un radical alkyle comportant à chaque fois de 1 à 6 atomes de carbone dans le radical alkyle, phényle, phényle substitué par des radicaux alkyle linéaires ou ramifiés contenant de 1 à 20 atomes de carbone, ou

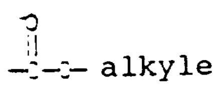 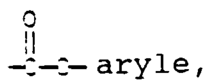 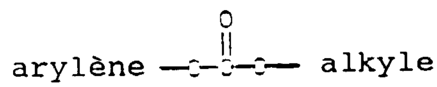

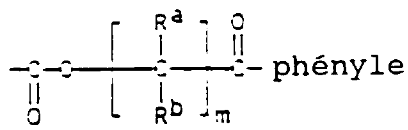 ou 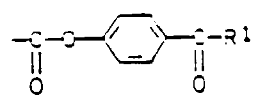

où alkyle peut contenir de 1 à 8 atomes de carbone, aryle peut contenir de 6 à 18 atomes de carbone, ou bien, dans le cas où R représente un radical aryle, l'un des symboles $R^2$ ou $R^6$ peut être un atome de soufre par lequel le reste aryle est lié à $R^1$ en position ortho.